# EUROPEAN PATENT APPLICATION

(11) **EP 4 592 016 A1**
(43) Date of publication of application: **30.07.2025**
(21) Application number: 25153050.7
(22) Date of filing: 21.01.2025
(51) Int. Cl.: B23K 26/0622, B23K 26/082, B23K 26/354, B23K 103/00

(54) **METHODS AND LASER ABLATION SYSTEMS FOR PREPARING SURFACES OF WORKPIECES**

(30) Priority: 29.01.2024 US 202418425050
(71) Applicant: The Boeing Company, Arlington, VA 22202 (US)
(72) Inventor: Helm, Scott L., Arlington, VA 22202 (US); Nassiri, Sohail J., Arlington, VA 22202 (US)
(74) Representative: Hoffmann Eitle

(57) **Abstract**

A method for preparing a surface of a workpiece includes selecting a target area on the surface of the workpiece for ablation in a multi-pass approach using an ultraviolet laser scanner and performing four ablation passes of the target area with the ultraviolet laser scanner in a pulsed mode. Each ablation pass includes a start leg, a shift and a return leg. Another method for preparing a surface of a workpiece includes selecting a target area on the surface of the workpiece for ablation in a multi-pass approach using an ultraviolet laser scanner and performing a first ablation pass of the target area with the ultraviolet laser scanner in a pulsed mode. The first ablation pass includes a first start leg, a first shift and a first return leg. A laser ablation system for preparing a surface of a workpiece includes a computing device and an ultraviolet laser scanner.

## Description

### FIELD

The present disclosure relates generally to preparing a surface of a workpiece and, particularly, to using an ultraviolet laser scanner to ablate the surface of the workpiece in a multi-pass approach. Various characteristics and parameters for the multi-pass approach are contemplated. Various examples of laser ablation systems for preparing a surface of the workpiece using the multi-pass approach are disclosed. For example, the laser ablation system includes a computing device and the ultraviolet laser scanner. After preparation of the surface, the workpiece is ready for application of a coating, such as a primer and a topcoat, paint or any other suitable type of coating.

### BACKGROUND

Traditional laser ablation processes used on thermoplastics result in heat buildup and subsequent melting of surface and subsurface layers of the composites. Grit blasting of thermoplastics is only approved for subsequent application of primer. There is no current surface preparation technology / solution for thermoplastics that can pass whirling arm rain erosion testing with primer and topcoat that is repeatable.

Accordingly, those skilled in the art continue with research and development efforts to improve techniques for laser ablation of surfaces of workpieces in preparation for application of a surface coating.

### SUMMARY

Disclosed are examples of methods and laser ablation systems for preparing surfaces of workpieces. The following is a non-exhaustive list of examples, which may or may not be claimed, of the subject matter according to the present disclosure.

In an example, the disclosed method for preparing a surface of a workpiece includes: (1) selecting a target area on the surface of the workpiece for ablation in a multi-pass approach using an ultraviolet laser scanner, the target area includes an x-axis and a y-axis; (2) performing a first ablation pass of the target area with the ultraviolet laser scanner in a pulsed mode, the first ablation pass includes a first start leg, a first shift and a first return leg; (3) performing a second ablation pass of the target area with the ultraviolet laser scanner in the pulsed mode, the second ablation pass includes a second start leg, a second shift and a second return leg; (4) performing a third ablation pass of the target area with the ultraviolet laser scanner in the pulsed mode, the third ablation pass includes a third start leg, a third shift and a third return leg; and (5) performing a fourth ablation pass of the target area with the ultraviolet laser scanner in the pulsed mode, the fourth ablation pass includes a fourth start leg, a fourth shift and a fourth return leg.

In another example, the disclosed method for preparing a surface of a workpiece includes: (1) selecting a target area on the surface of the workpiece for ablation in a multi-pass approach using an ultraviolet laser scanner, the target area includes an x-axis and a y-axis; and (2) performing a first ablation pass of the target area with the ultraviolet laser scanner in a pulsed mode, the first ablation pass includes a first start leg, a first shift and a first return leg, the first start leg being from a first start point of origin to a first start destination in an x-direction relating to the x-axis, the first shift being from the first start destination to a first return point of origin in a y-direction relating to the y-axis and the first return leg being from the first return point of origin to a first return destination in the x-direction, the first start leg and the first return leg being scanned at a predetermined speed to produce first laser ablation spots on the surface that are spaced apart from each other to reduce surface heating of the workpiece, the first shift resulting in the first laser ablation spots of the first return leg being spaced apart from the first laser ablation spots of the first start leg to further reduce surface heating of the workpiece.

In an example, the disclosed laser ablation system for preparing a surface of a workpiece includes a computing device and an ultraviolet laser scanner in operative communication with the computing device. The computing device is configured to select a target area on the surface of the workpiece for ablation in a multi-pass approach using the ultraviolet laser scanner. The target area includes an x-axis and a y-axis. The computing device and the ultraviolet laser scanner are configured to perform a first ablation pass of the target area in a pulsed mode. The first ablation pass includes a first start leg, a first shift and a first return leg. The computing device and the ultraviolet laser scanner are configured to perform a second ablation pass of the target area in the pulsed mode. The second ablation pass includes a second start leg, a second shift and a second return leg. The computing device and the ultraviolet laser scanner are configured to perform a third ablation pass of the target area in the pulsed mode. The third ablation pass includes a third start leg, a third shift and a third return leg. The computing device and the ultraviolet laser scanner are configured to perform a fourth ablation pass of the target area in the pulsed mode. The fourth ablation pass includes a fourth start leg, a fourth shift and a fourth return leg.

Other examples of the disclosed methods and laser ablation systems for preparing surfaces of workpieces will become apparent from the following detailed description, the accompanying drawings and the appended claims.

### BRIEF DESCRIPTION OF THE DRAWINGS

Fig. 1 is a flow diagram of an example of a method for preparing a surface of a workpiece;
Fig. 2 is a simulated microscopic top view of at least a portion of a target area on a surface of a workpiece in which four ablation passes are used to prepare the surface;
Figs. 3A-D are functional diagrams showing examples of the four ablation passes of Fig. 2;
Fig. 4, in combination with Fig. 1, is a flow diagram of another example of a method for preparing a surface of a workpiece;
Fig. 5, in combination with Fig. 1, is a flow diagram of yet another example of a method for preparing a surface of a workpiece;
Fig. 6 is a flow diagram of still another example of a method for preparing a surface of a workpiece;
Fig. 7, in combination with Fig. 6, is a flow diagram of still yet another example of a method for preparing a surface of a workpiece;
Fig. 8, in combination with Fig. 6, is a flow diagram of another example of a method for preparing a surface of a workpiece;
Fig. 9 is a functional block diagram of an example of a laser ablation system for preparing a surface of a workpiece;
Fig. 10 is a functional block diagram showing an example of the computing device in the laser ablation system of Fig. 9;
Fig. 11 is a block diagram of aircraft production and service methodology that implements one or more of the examples of for preparing a surface of a workpiece disclosed herein to produce or maintain components of the aircraft; and
Fig. 12 is a schematic illustration of an aircraft that incorporates one or more examples of components produced or maintained using laser ablation systems for preparing a surface of a workpiece disclosed herein.

### DETAILED DESCRIPTION

The various examples of methods 100, 400, 500, 600, 700, 800 and laser ablation systems 900 for preparing surfaces 906 of workpieces 908 disclosed herein identify techniques to effectively prepare thermoplastic surfaces for subsequent primer and topcoat applications using ultraviolet laser ablation. The techniques use a multi-stage pulse delivery process. By multi-stage pulse delivery, the ultraviolet laser ablation process removes surface resin and contamination on the thermoplastic surface while avoiding heat buildup and subsequent melting affects that traditional laser ablation processes produce. The methods 100, 400, 500, 600, 700, 800 and laser ablation systems 900 use a two-dimensional scanner and a pulsed ultraviolet laser, with scanning speeds and line spacings that are sped up to at least four times that of a single pass full-coverage scan. It is also possible to implement scanning speeds and lines spacings more than that of a single pass full-coverage scan but less than four times more.

For example, the multi-stage process delivers pulses in four scans. Each scan is programmed with offsets in the x-direction and y-direction to establish a predetermined overlap of previous and/or subsequent scans so that all areas of the surface are covered in a staged approach to reduce surface heating affects. For example, the first pass includes a start leg in the x-direction, an offset shift in the y-direction and a return leg in the x-direction. The second pass horizontally overlaps laser ablation spots of the first pass to ablate areas not ablated in the first pass. The third pass is offset from the first and second passes in the y-direction and, like the first pass, includes a start leg in the x-direction, an offset shift in the y-direction and a return leg in the x-direction. The fourth pass, like the second pass, horizontally overlaps laser ablation spots of the third pass to ablate areas not ablated in the third pass. Similarly, the third and fourth passes vertically overlap laser ablation spots of the first and second passes to ablate areas between the first and second legs of the first and second passes and to ablate an area below and adjacent to the return legs of the first and second passes.

The various examples of methods 100, 400, 500, 600, 700, 800 and laser ablation systems 900 for preparing surfaces of workpieces disclosed herein provide superior paint adhesion performance with primer and topcoat versus other surface preparation technologies. The multi-stage process uses scanning speeds and line spacings that are sped up to four times that of a single pass full-coverage scan. Each scan is programmed to offsets in the x and/or y-direction to a specified overlap so that all areas are hit on the part surface but in a staged approach to reduce surface heating affects. The process controls the ultraviolet laser scanner 904 throughout the multiple stages to minimize surface heating and spread out the laser pulses and resulting ablation spots on the surface.

Control of the ultraviolet laser scanner 904 permits increasing the scan speed and line spacing to create more space between laser pulses and use of the two-dimensional aspect to offset each multi-pass area (tile area) and each target area 910 (scan area) by a specified distance in the x and/or y-directions to fill in the spacing of laser ablation spots using the second, third and fourth passes. Some laser parameters can be fired at a 45-degree angle to create hooks in the surface that increase bond areas and promote paint locking. The various methods disclosed herein permit automated laser surface preparation of interior and exterior thermoplastic parts for paint, sealant and other finish system applications.

Success of an ultraviolet laser scanner 904 to ablate the surface of a thermoplastic component was demonstrated by passing a whirling arm rain erosion test after a BMS10-103 Gr. E primer and a BMS 10-60 Ty II topcoat was applied to the ablated surface. For example, this enables thermoplastics to be used to make airplane parts. The whirling arm rain erosion test is one of the oldest and most widely accepted tests when checking for paint adhesion. The Boeing specification support (BSS) standard 7393 was used for the whirling arm rain erosion test. The thermoplastic substrates tested were Boeing material specification (BMS) 8-399 and BMS 8-422.

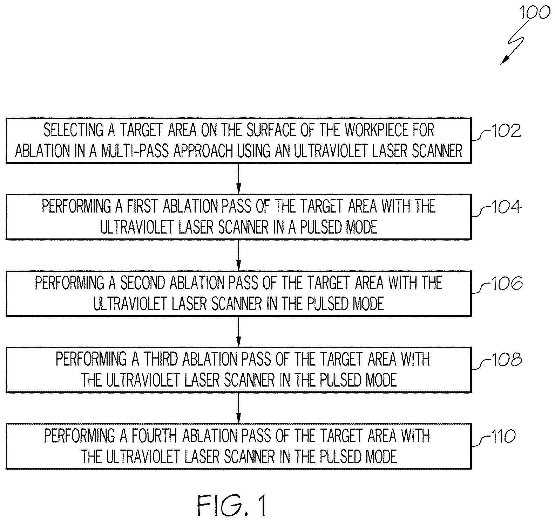

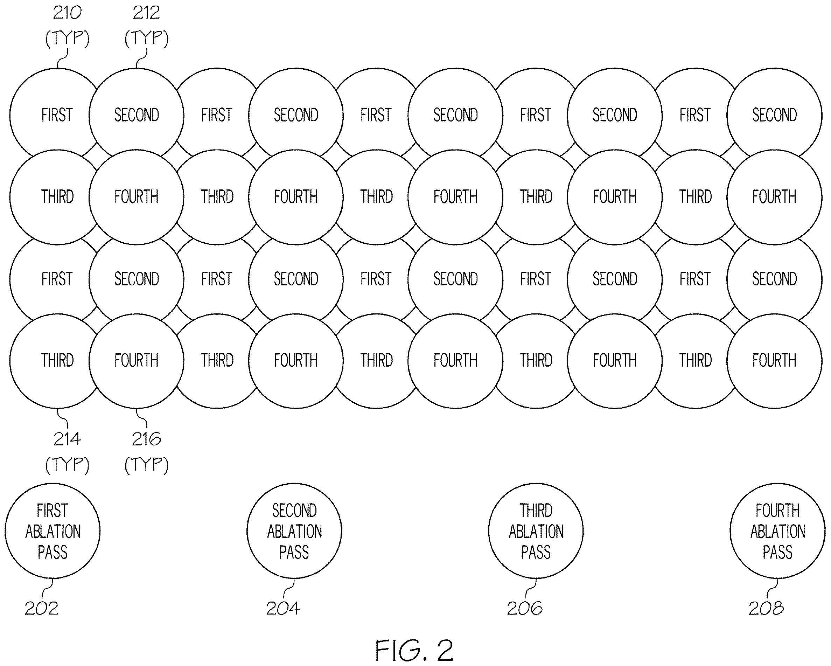

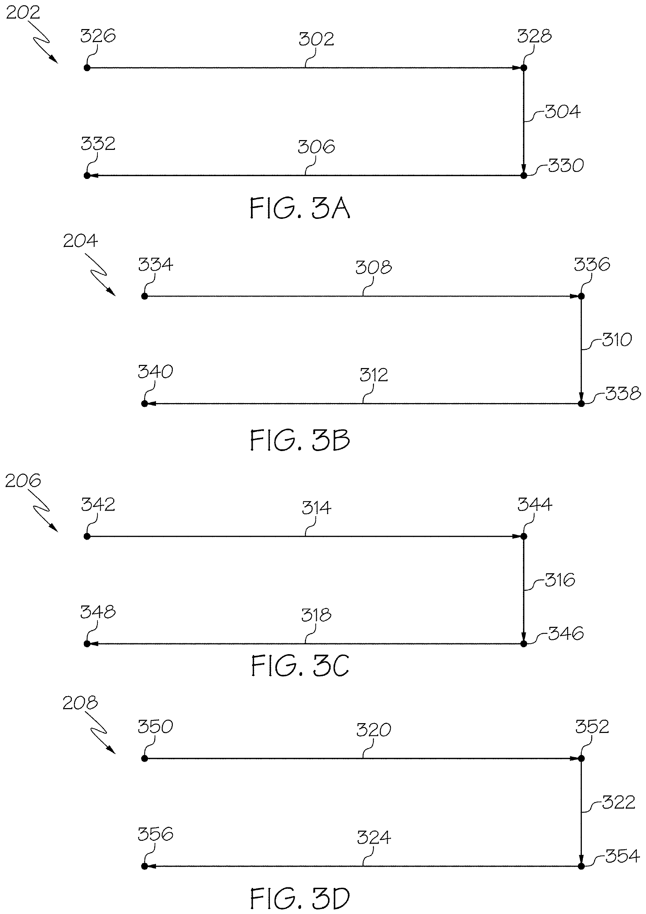

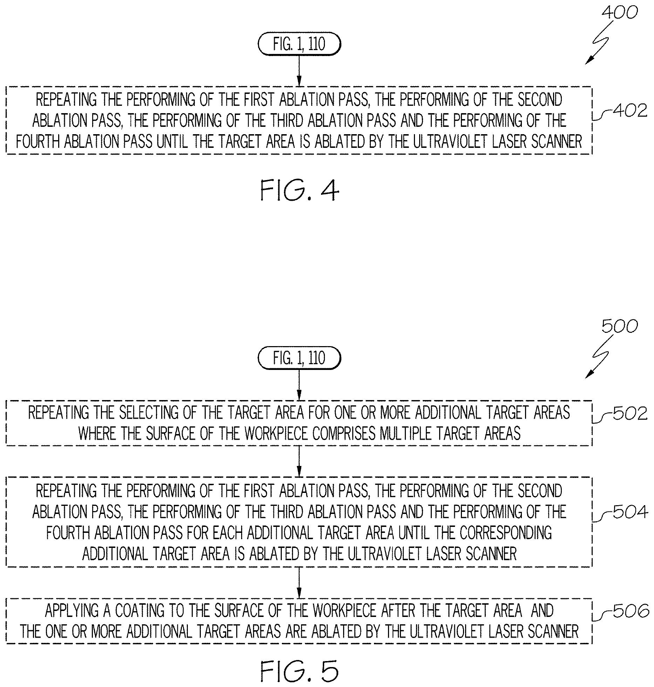

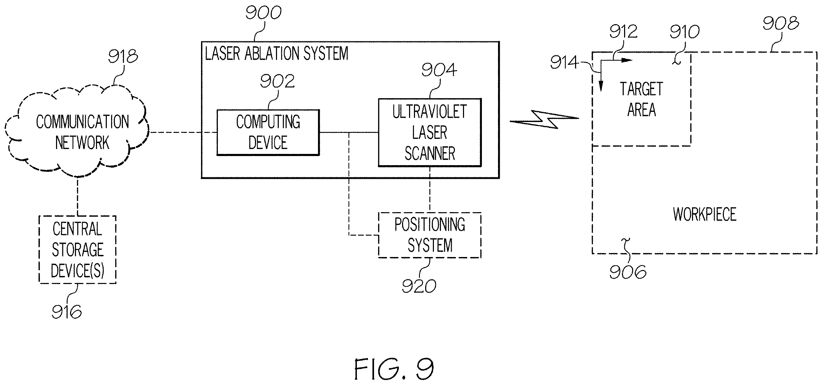

Referring generally to Figs. 1, 2, 3A-D, 4, 5 and 9, by way of examples, the present disclosure is directed to a method 100, 400, 500 for preparing a surface 906 of a workpiece 908. Fig. 1 provides an example of the method 100 for preparing a surface 906 of a workpiece 908. Fig. 2 provides a simulated microscopic top view of at least a portion of a target area 910 on a surface 906 of a workpiece 908 in which four ablation passes are used to prepare the surface. Figs. 3A-D provides functional diagrams showing examples of the four ablation passes of Fig. 2. Fig. 4, in combination with Fig. 1, provides an example of the method 400 for preparing a surface of a workpiece. Fig. 5, in combination with Fig. 1, provides an example of the method 500 for preparing a surface of a workpiece. Fig. 9 shows an example of a laser ablation system 900 for preparing a surface 906 of a workpiece 908.

With reference again to Figs. 1, 2, 3A-D and 9, in one or more examples, a method 100 (see Fig. 1) for preparing a surface 906 of a workpiece 908 includes selecting 102 a target area 910 on the surface 906 of the workpiece 908 for ablation in a multi-pass approach using an ultraviolet laser scanner 904. The target area 910 includes an x-axis 912 and a y-axis 914. At 104, a first ablation pass 202 of the target area 910 is performed with the ultraviolet laser scanner 904 in a pulsed mode. The first ablation pass 202 includes a first start leg 302, a first shift 304 and a first return leg 306. At 106, a second ablation pass 204 of the target area 910 is performed with the ultraviolet laser scanner 904 in the pulsed mode. The second ablation pass 204 includes a second start leg 308, a second shift 310 and a second return leg 312. At 108, a third ablation pass 206 of the target area 910 is performed with the ultraviolet laser scanner 904 in the pulsed mode. The third ablation pass 206 includes a third start leg 314, a third shift 316 and a third return leg 318. At 110, a fourth ablation pass 208 of the target area 910 is performed with the ultraviolet laser scanner 904 in the pulsed mode. The fourth ablation pass 208 includes a fourth start leg 320, a fourth shift 322 and a fourth return leg 324.

In another example of the method 100, the surface 906 includes an exterior surface of the workpiece 908, an interior surface of the workpiece 908 or any other suitable surface of the workpiece in any suitable combination. In yet another example of the method 100, the workpiece 908 includes a thermoplastic composite workpiece, a thermoplastic workpiece or any other suitable type of workpiece in any suitable combination. In still another example of the method 100, the ultraviolet laser scanner 904 includes a two-dimensional ultraviolet laser scanner.

In still yet another example of the method 100, the pulsed mode includes emission of ultraviolet laser pulses from the ultraviolet laser scanner 904 at a pulse rate of at least one of approximately 125 kilohertz (kHz), approximately 115 to approximately 135 kHz, approximately 105 to approximately 145 kHz, approximately 95 to approximately 155 kHz, approximately 85 to approximately 165 kHz, approximately 75 to approximately 175 kHz, approximately 65 to approximately 185 kHz, approximately 50 to approximately 200 kHz or any other suitable range of pulse rates. In another example of the method 100, the surface 906 of the workpiece 908 includes multiple target areas 910.

In yet another example of the method 100, the first start leg 302 extends from a first start point of origin 326 to a first start destination 328 in an x-direction relating to the x-axis 912, the first shift 304 extends from the first start destination 328 to a first return point of origin 330 in a y-direction relating to the y-axis 914 and the first return leg 306 extends from the first return point of origin 330 to a first return destination 332 in the x-direction. In a further example, the first start leg 302 and the first return leg 306 are scanned at a predetermined speed to produce first laser ablation spots 210 on the surface 906 that are spaced apart from each other to reduce surface heating of the workpiece 908. In an even further example, the first laser ablation spots 210 of the first start leg 302 are spaced apart from each other and the first laser ablation spots 210 of the first return leg 306 are spaced apart from each other by approximately 70% of a spot size for the first laser ablation spots 210, approximately 60% to approximately 80% of the spot size for the first laser ablation spots 210 or any other suitable percentage range of the spot size for the first laser ablation spots 210. In another even further example, the first shift 304 results in the first laser ablation spots 210 of the first return leg 306 being spaced apart from the first laser ablation spots 210 of the first start leg 302 to further reduce surface heating of the workpiece 908. In an even yet further example, the first laser ablation spots 210 of the first return leg 306 are spaced apart from the first laser ablation spots 210 of the first start leg 302 by approximately 70% of a spot size for the first laser ablation spots 210, approximately 60% to approximately 80% of the spot size for the first laser ablation spots 210 or any other suitable percentage range of the spot size for the first laser ablation spots 210.

In still another example of the method 100, the second start leg 308 extends from a second start point of origin 334 to a second start destination 336 in an x-direction relating to the x-axis 912, the second shift 310 extends from the second start destination 336 to a second return point of origin 338 in a y-direction relating to the y-axis 914 and the second return leg 312 extends from the second return point of origin 338 to a second return destination 340 in the x-direction. In a further example, the second start leg 308 and the second return leg 312 are scanned at a predetermined speed to produce second laser ablation spots 212 on the surface 906 that are spaced apart from each other to reduce surface heating of the workpiece 908. In an even further example, the second laser ablation spots 212 of the second start leg 308 are spaced apart from each other and the second laser ablation spots 212 of the second return leg 312 are spaced apart from each other by approximately 70% of a spot size for the second laser ablation spots 212, approximately 60% to approximately 80% of the spot size for the second laser ablation spots 212 or any other suitable percentage range of the spot size for the second laser ablation spots 212. In another even further example, the second shift 310 results in the second laser ablation spots 212 of the second return leg 312 being spaced apart from the second laser ablation spots 212 of the second start leg 308 to further reduce surface heating of the workpiece 908. In an even yet further example, the second laser ablation spots 212 of the second return leg 312 are spaced apart from the second laser ablation spots 212 of the second start leg 308 by approximately 70% of a spot size for the second laser ablation spots 212, approximately 60% to approximately 80% of the spot size for the second laser ablation spots 212 or any other suitable percentage range of the spot size for the second laser ablation spots 212.

In still yet another example of the method 100, the first start leg 302 extends from a first start point of origin 326 to a first start destination 328 in an x-direction relating to the x-axis 912, the first shift 304 extends from the first start destination 328 to a first return point of origin 330 in a y-direction relating to the y-axis 914 and the first return leg 306 extends from the first return point of origin 330 to a first return destination 332 in the x-direction. In this example, the second start leg 308 extends from a second start point of origin 334 to a second start destination 336 in the x-direction, the second shift 310 extends from the second start destination 336 to a second return point of origin 338 in the y-direction and the second return leg 312 extends from the second return point of origin 338 to a second return destination 340 in the x-direction. In a further example, the first start leg 302 and the first return leg 306 are scanned at a predetermined speed to produce first laser ablation spots 210 on the surface 906 that are spaced apart from each other to reduce surface heating of the workpiece 908. In this example, the second start leg 308 and the second return leg 312 are scanned at the predetermined speed to produce second laser ablation spots 212 on the surface 906 that are spaced apart from each other to further reduce surface heating of the workpiece 908. In an even further example, the second ablation pass 204 is interleaved with the first ablation pass 202 such that the second laser ablation spots 212 overlay spaces between the first laser ablation spots 210 of the first start leg 302 and the first return leg 306 and partially overlap adjacent first laser ablation spots 210. In an even yet further example, the second laser ablation spots 212 overlap the adjacent first laser ablation spots 210 by approximately 15% of a spot size for the second laser ablation spots 212, approximately 10% to approximately 20% of the spot size for the second laser ablation spots 212 or any other suitable percentage range of the spot size for the second laser ablation spots 212.

In another example of the method 100, the third start leg 314 extends from a third start point of origin 342 to a third start destination 344 in an x-direction relating to the x-axis 912, the third shift 316 extends from the third start destination 344 to a third return point of origin 346 in a y-direction relating to the y-axis 914 and the third return leg 318 extends from the third return point of origin 346 to a third return destination 348 in the x-direction. In a further example, the third start leg 314 and the third return leg 318 are scanned at a predetermined speed to produce third laser ablation spots 214 on the surface 906 that are spaced apart from each other to reduce surface heating of the workpiece 908. In an even further example, the third laser ablation spots 214 of the third start leg 314 are spaced apart from each other and the third laser ablation spots 214 of the third return leg 318 are spaced apart from each other by approximately 70% of a spot size for the third laser ablation spots 214, approximately 60% to approximately 80% of the spot size for the third laser ablation spots 214 or any other suitable percentage range of the spot size of the third laser ablation spots 214. In another even further example, the third shift 316 results in the third laser ablation spots 214 of the third return leg 318 being spaced apart from the third laser ablation spots 214 of the third start leg 314 to further reduce surface heating of the workpiece 908. In an even yet further example, the third laser ablation spots 214 of the third return leg 318 are spaced apart from the third laser ablation spots 214 of the third start leg 314 by approximately 70% of a spot size for the third laser ablation spots 214, approximately 60% to approximately 80% of the spot size for the third laser ablation spots 214 or any other suitable percentage range of the spot size for the third laser ablation spots 214.

In yet another example of the method 100, the first start leg 302 extends from a first start point of origin 326 to a first start destination 328 in an x-direction relating to the x-axis 912, the first shift 304 extends from the first start destination 328 to a first return point of origin 330 in a y-direction relating to the y-axis 914 and the first return leg 306 extends from the first return point of origin 330 to a first return destination 332 in the x-direction. In this example, the third start leg 314 extends from a third start point of origin 342 to a third start destination 344 in the x-direction, the third shift 316 extends from the third start destination 344 to a third return point of origin 346 in the y-direction and the third return leg 318 extends from the third return point of origin 346 to a third return destination 348 in the x-direction. In a further example, the first start leg 302 and the first return leg 306 are scanned at a predetermined speed to produce first laser ablation spots 210 on the surface 906 that are spaced apart from each other to reduce surface heating of the workpiece 908. In this example, the third start leg 314 and the third return leg 318 are scanned at the predetermined speed to produce third laser ablation spots 214 on the surface 906 that are spaced apart from each other to reduce surface heating of the workpiece 908. In an even further example, the third ablation pass 206 is interleaved with the first ablation pass 202 such that the third laser ablation spots 214 of the third start leg 314 overlay spaces between the first laser ablation spots 210 of the first start leg 302 and the first return leg 306 and partially overlap adjacent first laser ablation spots 210. In an even yet further example, the third laser ablation spots 214 overlap the adjacent first laser ablation spots 210 by approximately 15% of a spot size for the third laser ablation spots 214, approximately 10% to approximately 20% of the spot size for the third laser ablation spots 214 or any other suitable percentage range of the spot size for the third laser ablation spots 214.

In still another example of the method 100, the fourth start leg 320 extends from a fourth start point of origin 350 to a fourth start destination 352 in an x-direction relating to the x-axis 912, the fourth shift 322 extends from the fourth start destination 352 to a fourth return point of origin 354 in a y-direction relating to the y-axis 914 and the fourth return leg 324 extends from the fourth return point of origin 354 to a fourth return destination 356 in the x-direction. In a further example, the fourth start leg 320 and the fourth return leg 324 are scanned at a predetermined speed to produce fourth laser ablation spots 216 on the surface 906 that are spaced apart from each other to reduce surface heating of the workpiece 908. In an even further example, the fourth laser ablation spots 216 of the fourth start leg 320 are spaced apart from each other and the fourth laser ablation spots 216 of the fourth return leg 324 are spaced apart from each other by approximately 70% of a spot size for the fourth laser ablation spots 216, approximately 60% to approximately 80% of the spot size for the fourth laser ablation spots 216 or any other suitable percentage range of the spot size for the fourth laser ablation spots 216. In another even further example, the fourth shift 322 results in the fourth laser ablation spots 216 of the fourth return leg 324 being spaced apart from the fourth laser ablation spots 216 of the fourth start leg 320 to further reduce surface heating of the workpiece 908. In an even yet further example, the fourth laser ablation spots 216 of the fourth return leg 324 are spaced apart from the fourth laser ablation spots 216 of the fourth start leg 320 by approximately 70% of a spot size for the fourth laser ablation spots 216, approximately 60% to approximately 80% of the spot size for the fourth laser ablation spots 216 or any other suitable percentage range of the spot size for the fourth laser ablation spots 216.

In still yet another example of the method 100, the third start leg 314 extends from a third start point of origin 342 to a third start destination 344 in an x-direction relating to the x-axis 912, the third shift 316 extends from the third start destination 344 to a third return point of origin 346 in a y-direction relating to the y-axis 914 and the third return leg 318 extends from the third return point of origin 346 to a third return destination 348 in the x-direction. In this example, the fourth start leg 320 extends from a fourth start point of origin 350 to a fourth start destination 352 in the x-direction, the fourth shift 322 extends from the fourth start destination 352 to a fourth return point of origin 354 in the y-direction and the fourth return leg 324 extends from the fourth return point of origin 354 to a fourth return destination 356 in the x-direction. In a further example, the third start leg 314 and the third return leg 318 are scanned at a predetermined speed to produce third laser ablation spots 214 on the surface 906 that are spaced apart from each other to reduce surface heating of the workpiece 908. In this example, the fourth start leg 320 and the fourth return leg 324 are scanned at the predetermined speed to produce fourth laser ablation spots 216 on the surface 906 that are spaced apart from each other to reduce surface heating of the workpiece 908. In an even further example, the fourth ablation pass 208 is interleaved with the third ablation pass 206 such that the fourth laser ablation spots 216 overlay spaces between the third laser ablation spots 214 of the third start leg 314 and the third return leg 318 and partially overlap adjacent third laser ablation spots 214. In an even yet further example, the fourth laser ablation spots 216 overlap the adjacent third laser ablation spots 214 by approximately 15% of a spot size for the fourth laser ablation spots 216, approximately 10% to approximately 20% of the spot size for the fourth laser ablation spots 216 or any other suitable percentage range of the spot size for the fourth laser ablation spots 216.

With reference again to Figs. 1, 2, 4 and 9, in one or more examples, a method 400 (see Fig. 4) for preparing a surface 906 of a workpiece 908 includes the method 100 of Fig. 1. The method 400 continues from 110 of Fig. 1 to 402 to repeat the performing 104 of the first ablation pass 202, the performing 106 of the second ablation pass 204, the performing 108 of the third ablation pass 206 and the performing 110 of the fourth ablation pass 208 until the target area 910 is ablated by the ultraviolet laser scanner 904.

With reference again to Figs. 1, 2, 5 and 9, in one or more examples, a method 500 (see Fig. 5) for preparing a surface 906 of a workpiece 908 includes the method 100 of Fig. 1. The method 500 continues from 110 of Fig. 1 to 502 to repeat the selecting 102 of the target area 910 for one or more additional target areas 910 where the surface 906 of the workpiece 908 includes multiple target areas 910. At 504, the method 500 repeats the performing 104 of the first ablation pass 202, the performing 106 of the second ablation pass 204, the performing 108 of the third ablation pass 206 and the performing 110 of the fourth ablation pass 208 for each additional target area 910 until the additional target area 910 is ablated by the ultraviolet laser scanner 904.

In another example, the method 500 also includes applying 506 a coating to the surface 906 of the workpiece 908 after the target area 910 and the one or more additional target areas 910 are ablated by the ultraviolet laser scanner 904. In a further example, the coating includes a primer, a topcoat, a paint, a sealant or any other suitable coating in any suitable combination.

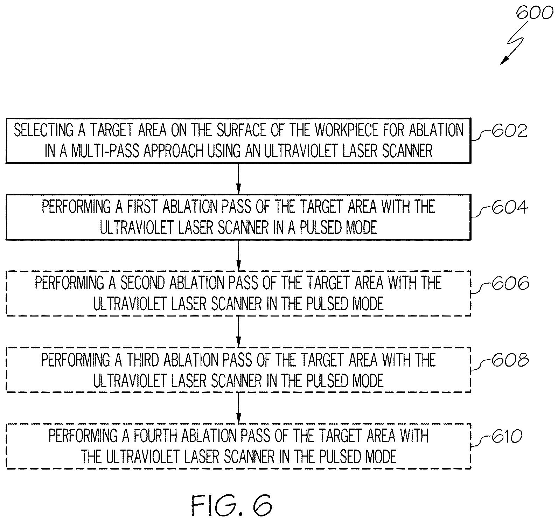

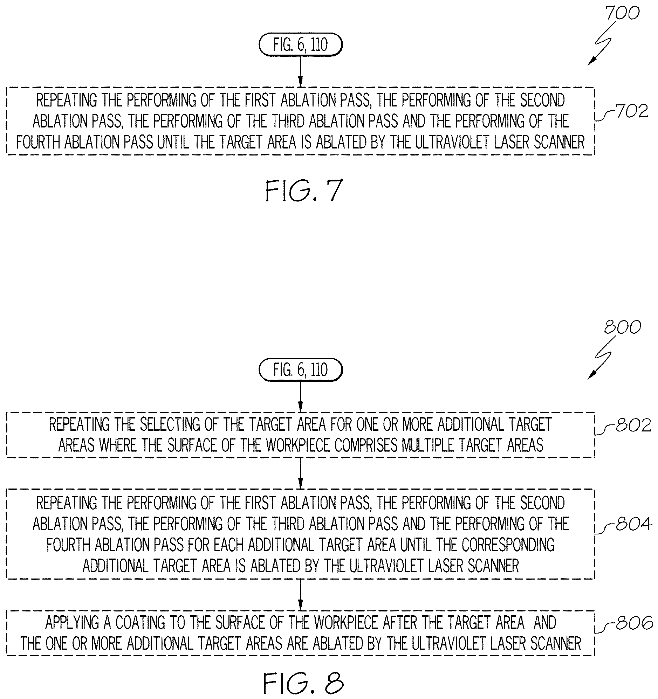

Referring generally to Figs. 2, 3A-D and 6-9, by way of examples, the present disclosure is directed to a method 600, 700, 800 for preparing a surface 906 of a workpiece 908. Fig. 2 provides a simulated microscopic top view of at least a portion of a target area 910 on a surface 906 of a workpiece 908 in which four ablation passes are used to prepare the surface. Figs. 3A-D provides functional diagrams showing examples of the four ablation passes of Fig. 2. Fig. 6 provides an example of the method 600 for preparing a surface 906 of a workpiece 908. Fig. 7, in combination with Fig. 6, provides an example of the method 700 for preparing a surface of a workpiece. Fig. 8, in combination with Fig. 6, provides an example of the method 800 for preparing a surface of a workpiece. Fig. 9 shows an example of a laser ablation system 900 for preparing a surface 906 of a workpiece 908.

With reference again to Figs. 2, 3A-D, 6 and 9, in one or more examples, a method 600 (see Fig. 6) for preparing a surface 906 of a workpiece 908 that includes selecting 602 a target area 910 on the surface 906 of the workpiece 908 for ablation in a multi-pass approach using an ultraviolet laser scanner 904. The target area 910 includes an x-axis 912 and a y-axis 914. At 604, a first ablation pass 202 of the target area 910 is performed with the ultraviolet laser scanner 904 in a pulsed mode. The first ablation pass 202 includes a first start leg 302, a first shift 304 and a first return leg 306. The first start leg 302 being from a first start point of origin 326 to a first start destination 328 in an x-direction relating to the x-axis 912. The first shift 304 being from the first start destination 328 to a first return point of origin 330 in a y-direction relating to the y-axis 914. The first return leg 306 being from the first return point of origin 330 to a first return destination 332 in the x-direction. The first start leg 302 and the first return leg 306 being scanned at a predetermined speed to produce first laser ablation spots 210 on the surface 906 that are spaced apart from each other to reduce surface heating of the workpiece 908. The first shift 304 resulting in the first laser ablation spots 210 of the first return leg 306 being spaced apart from the first laser ablation spots 210 of the first start leg 302 to further reduce surface heating of the workpiece 908.

In another example of the method 600, the surface 906 includes an exterior surface of the workpiece 908, an interior surface of the workpiece 908 or any other suitable surface of the workpiece in any suitable combination. In yet another example of the method 600, the workpiece 908 includes a thermoplastic composite workpiece, a thermoplastic workpiece or any other suitable workpiece in any suitable combination. In still yet another example of the method 600, the ultraviolet laser scanner 904 includes a two-dimensional ultraviolet laser scanner.

In another example of the method 600, the pulsed mode includes emission of ultraviolet laser pulses from the ultraviolet laser scanner 904 at a pulse rate of at least one of approximately 125 kHz, approximately 115 to approximately 135 kHz, approximately 105 to approximately 145 kHz, approximately 95 to approximately 155 kHz, approximately 85 to approximately 165 kHz, approximately 75 to approximately 175 kHz, approximately 65 to approximately 185 kHz, approximately 50 to approximately 200 kHz or any other suitable range of pulse rates. In yet another example of the method 600, the surface 906 of the workpiece 908 includes multiple target areas 910.

In still another example, the method 600 also includes performing 606 a second ablation pass 204 of the target area 910 with the ultraviolet laser scanner 904 in the pulsed mode. The second ablation pass 204 includes a second start leg 308, a second shift 310 and a second return leg 312. The second start leg 308 being from a second start point of origin 334 to a second start destination 336 in the x-direction. The second shift 310 being from the second start destination 336 to a second return point of origin 338 in the y-direction. The second return leg 312 being from the second return point of origin 338 to a second return destination 340 in the x-direction. The second start leg 308 and the second return leg 312 being scanned at the predetermined speed to produce second laser ablation spots 212 on the surface 906 that are spaced apart from each other to reduce surface heating of the workpiece 908. The second shift 310 resulting in the second laser ablation spots 212 of the second return leg 312 being spaced apart from the second laser ablation spots 212 of the second start leg 308 to further reduce surface heating of the workpiece 908. The second ablation pass 204 being interleaved with the first ablation pass 202 such that the second laser ablation spots 212 overlay spaces between the first laser ablation spots 210 of the first start leg 302 and the first return leg 306 and partially overlap adjacent first laser ablation spots 210.

In still yet another example, the method 600 also includes performing 608 a third ablation pass 206 of the target area 910 with the ultraviolet laser scanner 904 in the pulsed mode. The third ablation pass 206 includes a third start leg 314, a third shift 316 and a third return leg 318. The third start leg 314 being from a third start point of origin 342 to a third start destination 344 in the x-direction. The third shift 316 being from the third start destination 344 to a third return point of origin 346 in the y-direction. The third return leg 318 being from the third return point of origin 346 to a third return destination 348 in the x-direction. The third start leg 314 and the third return leg 318 being scanned at the predetermined speed to produce third laser ablation spots 214 on the surface 906 that are spaced apart from each other to reduce surface heating of the workpiece 908. The third shift 316 resulting in the third laser ablation spots 214 of the third return leg 318 being spaced apart from the third laser ablation spots 214 of the third start leg 314 to further reduce surface heating of the workpiece 908. The third ablation pass 206 being interleaved with the first ablation pass 202 such that the third laser ablation spots 214 of the third start leg 314 overlay spaces between the first laser ablation spots 210 of the first start leg 302 and the first return leg 306 and partially overlap adjacent first laser ablation spots 210.

In another example, the method 600 also includes performing 610 a fourth ablation pass 208 of the target area 910 with the ultraviolet laser scanner 904 in a pulsed mode. The fourth ablation pass 208 includes a fourth start leg 320, a fourth shift 322 and a fourth return leg 324. The fourth start leg 320 being from a fourth start point of origin 350 to a fourth start destination 352 in the x-direction. The fourth shift 322 being from the fourth start destination 352 to a fourth return point of origin 354 in the y-direction. The fourth return leg 324 being from the fourth return point of origin 354 to a fourth return destination 356 in the x-direction. The fourth start leg 320 and the fourth return leg 324 being scanned at the predetermined speed to produce fourth laser ablation spots 216 on the surface 906 that are spaced apart from each other to reduce surface heating of the workpiece 908. The fourth shift 322 resulting in the fourth laser ablation spots 216 of the fourth return leg 324 being spaced apart from the fourth laser ablation spots 216 of the fourth start leg 320 to further reduce surface heating of the workpiece 908. The fourth ablation pass 208 being interleaved with the third ablation pass 206 such that the fourth laser ablation spots 216 overlay spaces between the third laser ablation spots 214 of the third start leg 314 and the third return leg 318 and partially overlap adjacent third laser ablation spots 214.

With reference again to Figs. 2, 6, 7 and 9, in one or more examples, a method 700 (see Fig. 7) for preparing a surface 906 of a workpiece 908 includes the method 600 of Fig. 6. The method 700 continues from 610 of Fig. 6 to 702 to repeat the performing 604 of the first ablation pass 202, the performing 606 of the second ablation pass 204, the performing 608 of the third ablation pass 206 and the performing 610 of the fourth ablation pass 208 until the target area 910 is ablated by the ultraviolet laser scanner 904.

With reference again to Figs. 2, 6, 8 and 9, in one or more examples, a method 800 (see Fig. 8) for preparing a surface 906 of a workpiece 908 includes the method 600 of Fig. 6. The method 800 continues from 610 of Fig. 6 to 802 to repeat the selecting 602 of the target area 910 for one or more additional target areas 910 where the surface 906 of the workpiece 908 includes multiple target areas 910. At 804, the method 800 repeats the performing 604 of the first ablation pass 202, the performing 606 of the second ablation pass 204, the performing 608 of the third ablation pass 206 and the performing 610 of the fourth ablation pass 208 for each additional target area 910 until the additional target area 910 is ablated by the ultraviolet laser scanner 904.

In another example, the method 800 also includes applying 806 a coating to the surface 906 of the workpiece 908 after the target area 910 and the one or more additional target areas 910 are ablated by the ultraviolet laser scanner 904. In a further example, the coating includes a primer, a topcoat, a paint, a sealant or any other suitable coating in any suitable combination.

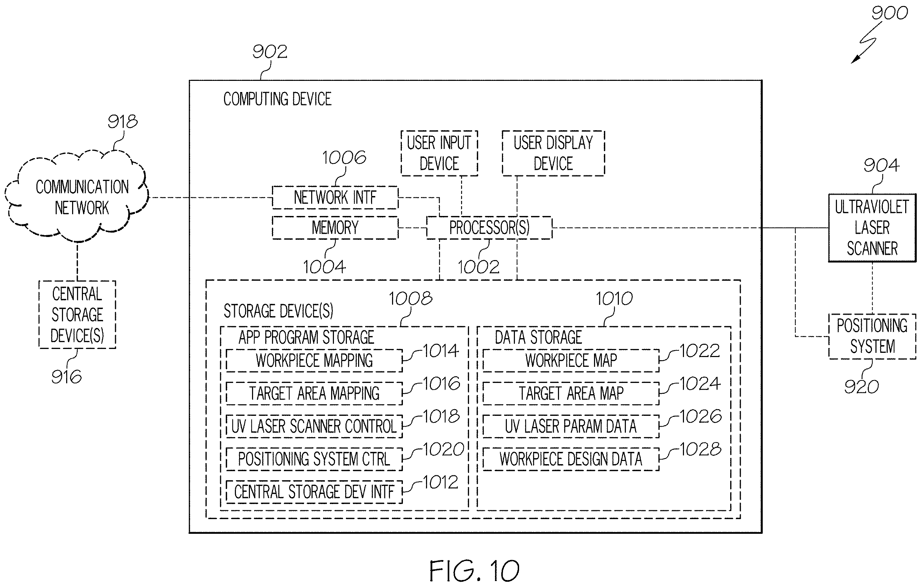

Referring generally to Figs. 2, 3A-D, 9 and 10, by way of examples, the present disclosure is directed to a laser ablation system 900 for preparing a surface 906 of a workpiece 908. Fig. 2 provides a simulated microscopic top view of at least a portion of a target area 910 on a surface 906 of a workpiece 908 in which four ablation passes are used to prepare the surface. Figs. 3A-D provides functional diagrams showing examples of the four ablation passes of Fig. 2. Fig. 9 shows an example of a laser ablation system 900 for preparing a surface 906 of a workpiece 908. Fig. 10 shows an example of a computing device 902 in the laser ablation system 900 of Fig. 9.

Referring again to Figs. 2, 3A-D, 9 and 10, in one or more example, a laser ablation system 900 for preparing a surface 906 of a workpiece 908 includes a computing device 902 and an ultraviolet laser scanner 904 in operative communication with the computing device 902. The computing device 902 is configured to select a target area 910 on the surface 906 of the workpiece 908 for ablation in a multi-pass approach using the ultraviolet laser scanner 904. The target area 910 includes an x-axis 912 and a y-axis 914. The computing device 902 and the ultraviolet laser scanner 904 are configured to perform a first ablation pass 202 of the target area 910 in a pulsed mode. The first ablation pass 202 includes a first start leg 302, a first shift 304 and a first return leg 306. The computing device 902 and the ultraviolet laser scanner 904 are configured to perform a second ablation pass 204 of the target area 910 in the pulsed mode, the second ablation pass 204 includes a second start leg 308, a second shift 310 and a second return leg 312. The computing device 902 and the ultraviolet laser scanner 904 are configured to perform a third ablation pass 206 of the target area 910 in the pulsed mode. The third ablation pass 206 includes a third start leg 314, a third shift 316 and a third return leg 318. The computing device 902 and the ultraviolet laser scanner 904 are configured to perform a fourth ablation pass 208 of the target area 910 in the pulsed mode. The fourth ablation pass 208 includes a fourth start leg 320, a fourth shift 322 and a fourth return leg 324.

In another example of the laser ablation system 900, the surface 906 includes an exterior surface of the workpiece 908, an interior surface of the workpiece 908 or any other suitable surface in any suitable combination.

In yet another example of the laser ablation system 900, the workpiece 908 includes a thermoplastic composite workpiece, a thermoplastic workpiece or any other suitable workpiece in any suitable combination.

In still another example of the laser ablation system 900, the ultraviolet laser scanner 904 includes a two-dimensional ultraviolet laser scanner.

In still yet another example of the laser ablation system 900, the pulsed mode includes emission of ultraviolet laser pulses from the ultraviolet laser scanner 904 at a pulse rate of approximately 120 kHz, approximately 110 to approximately 130 kHz, approximately 100 to approximately 140 kHz, approximately 90 to approximately 150 kHz, approximately 80 to approximately 160 kHz, approximately 70 to approximately 170 kHz or any other suitable range of pulse rates.

In another example of the laser ablation system 900, the surface 906 of the workpiece 908 includes multiple target areas 910.

In yet another example of the laser ablation system 900, the computing device 902 includes at least one processor 1002 and associated memory 1004, a network interface 1006, the ultraviolet laser scanner 904, a positioning system 920, at least one application program storage device 1008 and at least one data storage device 1010. The network interface 1006 in operative communication with the at least one processor 1002 and at least one central storage device 916 via a communication network 918. The ultraviolet laser scanner 904 in operative communication with the at least one processor 1002. The positioning system 920 is in operative communication with the at least one processor 1002. The at least one application program storage device 1008 in operative communication with the at least one processor 1002. The at least one application program storage device 1008 storing a central storage device interface program 1012, a workpiece mapping application program 1014, a target area mapping application program 1016, an ultraviolet laser scanner control program 1018 and a positioning system control program 1020. The at least one data storage device 1010 in operative communication with the at least one processor 1002. The at least one data storage device 1010 configured to store a workpiece map 1022, a target area map 1024, ultraviolet laser scanner parameter data 1026 and workpiece design data 1028.

In a further example, the at least one processor 1002, in conjunction with the target area mapping application program 1016, is configured to define the first ablation pass 202 in which the first start leg 302 extends from a first start point of origin 326 to a first start destination 328 in an x-direction relating to the x-axis 912, the first shift 304 extends from the first start destination 328 to a first return point of origin 330 in a y-direction relating to the y-axis 914 and the first return leg 306 extends from the first return point of origin 330 to a first return destination 332 in the x-direction.

In an even further example, the at least one processor 1002 and the ultraviolet laser scanner 904, in conjunction with the ultraviolet laser scanner control program 1018, are configured to scan the first start leg 302 and the first return leg 306 at a predetermined speed to produce first laser ablation spots 210 on the surface 906 that are spaced apart from each other to reduce surface heating of the workpiece 908.

In an even yet further example, the at least one processor 1002 and the ultraviolet laser scanner 904, in conjunction with the ultraviolet laser scanner control program 1018, are configured to perform the first shift 304 which results in the first laser ablation spots 210 of the first return leg 306 being spaced apart from the first laser ablation spots 210 of the first start leg 302 to further reduce surface heating of the workpiece 908.

In another further example, the at least one processor 1002, in conjunction with the target area mapping application program 1016, is configured to define the second ablation pass 204 in which the second start leg 308 extends from a second start point of origin 334 to a second start destination 336 in an x-direction relating to the x-axis 912, the second shift 310 extends from the second start destination 336 to a second return point of origin 338 in a y-direction relating to the y-axis 914 and the second return leg 312 extends from the second return point of origin 338 to a second return destination 340 in the x-direction.

In an even further example, the at least one processor 1002 and the ultraviolet laser scanner 904, in conjunction with the ultraviolet laser scanner control program 1018, are configured to scan the second start leg 308 and the second return leg 312 at a predetermined speed to produce second laser ablation spots 212 on the surface 906 that are spaced apart from each other to reduce surface heating of the workpiece 908.

In an even yet further example, the at least one processor 1002 and the ultraviolet laser scanner 904, in conjunction with the ultraviolet laser scanner control program 1018, are configured to perform the second shift 310 which results in the second laser ablation spots 212 of the second return leg 312 being spaced apart from the second laser ablation spots 212 of the second start leg 308 to further reduce surface heating of the workpiece 908.

In an even still further example, the at least one processor 1002 and the ultraviolet laser scanner 904, in conjunction with the target area mapping application program 1016 and the ultraviolet laser scanner control program 1018, are configured to interleave the second ablation pass 204 with the first ablation pass 202 such that the second laser ablation spots 212 overlay spaces between the first laser ablation spots 210 of the first start leg 302 and the first return leg 306 and partially overlap adjacent first laser ablation spots 210.

In yet another further example, the at least one processor 1002, in conjunction with the target area mapping application program 1016, is configured to define the third ablation pass 206 in which the third start leg 314 extends from a third start point of origin 342 to a third start destination 344 in an x-direction relating to the x-axis 912, the third shift 316 extends from the third start destination 344 to a third return point of origin 346 in a y-direction relating to the y-axis 914 and the third return leg 318 extends from the third return point of origin 346 to a third return destination 348 in the x-direction.

In an even further example, the at least one processor 1002 and the ultraviolet laser scanner 904, in conjunction with the ultraviolet laser scanner control program 1018, are configured to scan the third start leg 314 and the third return leg 318 at a predetermined speed to produce third laser ablation spots 214 on the surface 906 that are spaced apart from each other to reduce surface heating of the workpiece 908.

In an even yet further example, the at least one processor 1002 and the ultraviolet laser scanner 904, in conjunction with the ultraviolet laser scanner control program 1018, are configured to perform the third shift 316 which results in the third laser ablation spots 214 of the third return leg 318 being spaced apart from the third laser ablation spots 214 of the third start leg 314 to further reduce surface heating of the workpiece 908.

In an even still further example, the at least one processor 1002 and the ultraviolet laser scanner 904, in conjunction with the target area mapping application program 1016 and the ultraviolet laser scanner control program 1018, are configured to interleave the third ablation pass 206 with the first ablation pass 202 such that the third laser ablation spots 214 of the third start leg 314 overlay spaces between first laser ablation spots 210 of the first start leg 302 and the first return leg 306 and partially overlap adjacent first laser ablation spots 210.

In still another further example, the at least one processor 1002, in conjunction with the target area mapping application program 1016, is configured to define the fourth ablation pass 208 in which the fourth start leg 320 extends from a fourth start point of origin 350 to a fourth start destination 352 in an x-direction relating to the x-axis 912, the fourth shift 322 extends from the fourth start destination 352 to a fourth return point of origin 354 in a y-direction relating to the y-axis 914 and the fourth return leg 324 extends from the fourth return point of origin 354 to a fourth return destination 356 in the x-direction.

In an even further example, the at least one processor 1002 and the ultraviolet laser scanner 904, in conjunction with the ultraviolet laser scanner control program 1018, are configured to scan the fourth start leg 320 and the fourth return leg 324 at a predetermined speed to produce fourth laser ablation spots 216 on the surface 906 that are spaced apart from each other to reduce surface heating of the workpiece 908.

In an even yet further example, the at least one processor 1002 and the ultraviolet laser scanner 904, in conjunction with the ultraviolet laser scanner control program 1018, are configured to perform the fourth shift 322 which results in the fourth laser ablation spots 216 of the fourth return leg 324 being spaced apart from the fourth laser ablation spots 216 of the fourth start leg 320 to further reduce surface heating of the workpiece 908.

In an even still further example, the at least one processor 1002 and the ultraviolet laser scanner 904, in conjunction with the target area mapping application program 1016 and the ultraviolet laser scanner control program 1018, are configured to interleave the fourth ablation pass 208 with the third ablation pass 206 such that the fourth laser ablation spots 216 overlay spaces between third laser ablation spots 214 of the of the third start leg 314 and the third return leg 318 and partially overlap adjacent third laser ablation spots 214.

In still yet another further example, the at least one processor 1002 the ultraviolet laser scanner 904, in conjunction with the target area mapping application program 1016 and the ultraviolet laser scanner control program 1018, are configured to repetitively perform the first ablation pass 202, the second ablation pass 204, the third ablation pass 206 and the fourth ablation pass 208 until the target area 910 is ablated by the ultraviolet laser scanner 904.

In another further example, the at least one processor 1002, the ultraviolet laser scanner 904 and the positioning system 920, in conjunction with the workpiece mapping application program 1014, the ultraviolet laser scanner control program 1018 and the positioning system control program 1020, are configured to repetitively select one or more additional target areas 910 where the surface 906 of the workpiece 908 includes multiple target areas 910. In this example, the at least one processor 1002 the ultraviolet laser scanner 904, in conjunction with the target area mapping application program 1016 and the ultraviolet laser scanner control program 1018, are configured to repetitively perform the first ablation pass 202, the second ablation pass 204, the third ablation pass 206 and the fourth ablation pass 208 for each additional target area 910 until the additional target area 910 is ablated by the ultraviolet laser scanner 904.

Examples of the methods 100, 400, 500, 600, 700, 800 and laser ablation systems 900 for preparing surfaces 906 of workpieces 908 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may be implemented to produce components and other equipment in various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element or component in the different drawings. Throughout the present disclosure, any one of a plurality of items may be referred to individually as the item and a plurality of items may be referred to collectively as the items and may be referred to with like reference numerals. Moreover, as used herein, a feature, element, component or step preceded with the word "a" or "an" should be understood as not excluding a plurality of features, elements, components or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component or hardware "configured to" perform a specified function is indeed capable of performing the specified function without any alteration, rather than merely having potential to perform the specified function after further modification. In other words, the system, apparatus, device, structure, article, element, component or hardware "configured to" perform a specified function is specifically selected, created, implemented, utilized, programmed and/or designed for the purpose of performing the specified function. As used herein, "configured to" denotes existing characteristics of a system, apparatus, structure, article, element, component or hardware that enable the system, apparatus, structure, article, element, component or hardware to perform the specified function without further modification. For purposes of this disclosure, a system, apparatus, device, structure, article, element, component or hardware described as being "configured to" perform a particular function may additionally or alternatively be described as being "adapted to" and/or as being "operative to" perform that function.

Unless otherwise indicated, the terms "first," "second," "third," etc. are used herein merely as labels and are not intended to impose ordinal, positional or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of' may be, for example, without limitation, two of item A, one of item B and ten of item C; four of item B and seven of item C; and other suitable combinations. As used herein, the term "and/or" and the "j" symbol includes any and all combinations of one or more of the associated listed items.

As used herein, the terms "coupled," "coupling," and similar terms refer to two or more elements that are joined, linked, fastened, attached, connected, put in communication or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1 and 4-8, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 1 and 4-8 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

In Figs. 2, 3A-D, 9 and 10, referred to above, may represent functional elements, features or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 2, 3A-D, 9 and 10, referred to above, need be included in every example and not all elements, features and/or components described herein are necessarily depicted in each illustrative example. Accordingly, some of the elements, features and/or components described and illustrated in Figs. 2, 3A-D, 9 and 10 may be combined in various ways without the need to include other features described and illustrated in Figs. 2, 3A-D, 9 and 10, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 2, 3A-D, 9 and 10, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 2, 3A-D, 9 and 10 and such elements, features and/or components may not be discussed in detail herein with reference to each of Figs. 2, 3A-D, 9 and 10. Similarly, all elements, features and/or components may not be labeled in each of Figs. 2, 3A-D, 9 and 10, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage or characteristic described in connection with an example is included in at least one example. Thus, discussion of features, advantages and similar language used throughout the present disclosure may, but does not necessarily, refer to the same example.

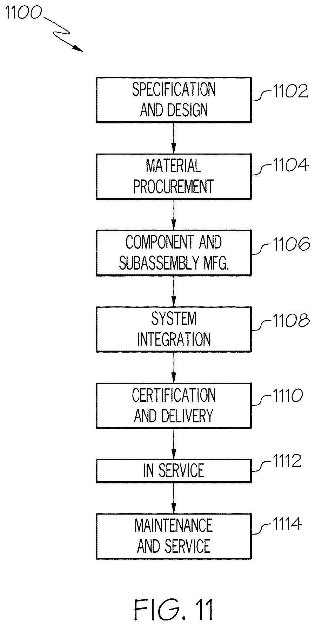

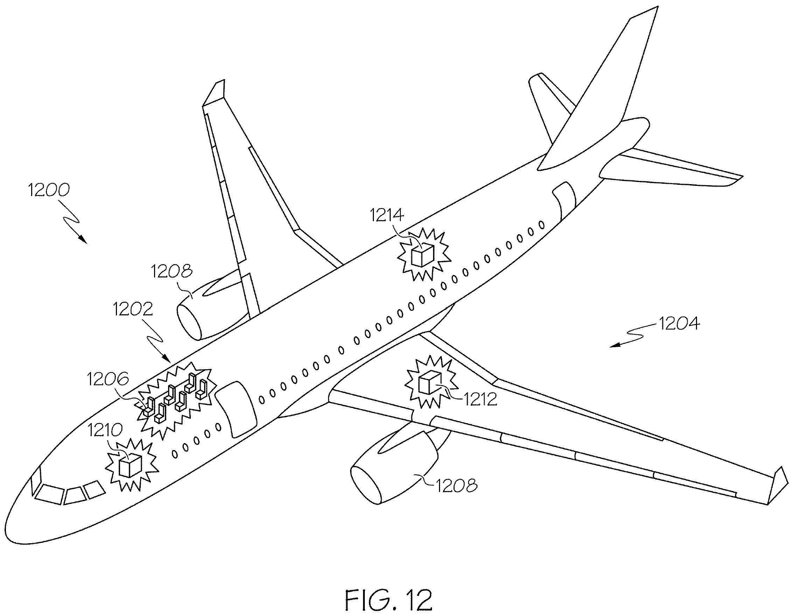

Examples of the subject matter disclosed herein may be described in the context of aircraft manufacturing and service method 1100 as shown in Fig. 11 and aircraft 1200 as shown in Fig. 12. In one or more examples, the disclosed methods and systems for associating test data for a part under test with an end item coordinate system may be used in aircraft manufacturing. During pre-production, the service method 1100 may include specification and design (block 1102) of aircraft 1200 and material procurement (block 1104). During production, component and subassembly manufacturing (block 1106) and system integration (block 1108) of aircraft 1200 may take place. Thereafter, aircraft 1200 may go through certification and delivery (block 1110) to be placed in service (block 1112). While in service, aircraft 1200 may be scheduled for routine maintenance and service (block 1114). Routine maintenance and service may include modification, reconfiguration, refurbishment, etc. of one or more systems of aircraft 1200.

Each of the processes of the service method 1100 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 12, aircraft 1200 produced by the service method 1100 may include airframe 1202 with a plurality of high-level systems 1204 and interior 1206. Examples of high-level systems 1204 include one or more of propulsion system 1208, electrical system 1120, hydraulic system 1212 and environmental system 1214. Any number of other systems may be included. Although an aerospace example is shown, the principles disclosed herein may be applied to other industries, such as the automotive industry. Accordingly, in addition to aircraft 1200, the principles disclosed herein may apply to other vehicles, e.g., land vehicles, marine vehicles, space vehicles, etc.

The disclosed methods 100, 400, 500, 600, 700, 800 and laser ablation systems 900 for preparing surfaces 906 of workpieces 908 may be employed during any one or more of the stages of the manufacturing and service method 1100. For example, components or subassemblies corresponding to component and subassembly manufacturing (block 1106) may be fabricated or manufactured in a manner similar to components or subassemblies produced while aircraft 1200 is in service (block 1112). Also, one or more examples of the system(s), method(s) or combination thereof may be utilized during production stages (block 1106 and block 1108), for example, by substantially expediting assembly of or reducing the cost of aircraft 1200. Similarly, one or more examples of the system or method realizations or a combination thereof, may be utilized, for example and without limitation, while aircraft 1200 is in service (block 1112) and/or during maintenance and service (block 1114).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 400, 500, 600, 700, 800 and laser ablation systems 900 for preparing surfaces 906 of workpieces 908 have been shown and described, modifications may occur to those skilled in the art upon reading the specification. The present application includes such modifications and is limited only by the scope of the claims.

The following numbered paragraphs disclose further aspects of the present invention.
1. A method for preparing a surface of a workpiece, the method comprising:
   selecting a target area on the surface of the workpiece for ablation in a multi-pass approach using an ultraviolet laser scanner, the target area comprising an x-axis and a y-axis;
   performing a first ablation pass of the target area with the ultraviolet laser scanner in a pulsed mode, the first ablation pass comprising a first start leg, a first shift and a first return leg;
   performing a second ablation pass of the target area with the ultraviolet laser scanner in the pulsed mode, the second ablation pass comprising a second start leg, a second shift and a second return leg;
   performing a third ablation pass of the target area with the ultraviolet laser scanner in the pulsed mode, the third ablation pass comprising a third start leg, a third shift and a third return leg; and
   performing a fourth ablation pass of the target area with the ultraviolet laser scanner in the pulsed mode, the fourth ablation pass comprising a fourth start leg, a fourth shift and a fourth return leg.
2. The method of 1, wherein the surface comprises at least one of an exterior surface of the workpiece and an interior surface of the workpiece.
3. The method of 1 or 2, wherein the workpiece comprises at least one of a thermoplastic composite workpiece and a thermoplastic workpiece.
4. The method of any one of 1 to 3, wherein the ultraviolet laser scanner comprises a two-dimensional ultraviolet laser scanner.
5. The method of any one of 1 to 4, wherein the pulsed mode comprises emission of ultraviolet laser pulses from the ultraviolet laser scanner at a pulse rate of at least one of approximately 125 kilohertz (kHz), approximately 115 to approximately 135 kHz, approximately 105 to approximately 145 kHz, approximately 95 to approximately 155 kHz, approximately 85 to approximately 165 kHz, approximately 75 to approximately 175 kHz, approximately 65 to approximately 185 kHz and approximately 50 to approximately 200 kHz.
6. The method of any one of 1 to 5, wherein the surface of the workpiece comprises multiple target areas.
7. The method of any one of 1 to 6, wherein the first start leg extends from a first start point of origin to a first start destination in an x-direction relating to the x-axis, the first shift extends from the first start destination to a first return point of origin in a y-direction relating to the y-axis and the first return leg extends from the first return point of origin to a first return destination in the x-direction.
8. The method of any one of 1 to 7, wherein the first start leg and the first return leg are scanned at a predetermined speed to produce first laser ablation spots on the surface that are spaced apart from each other to reduce surface heating of the workpiece.
9. The method of 8, wherein the first laser ablation spots of the first start leg are spaced apart from each other and the first laser ablation spots of the first return leg are spaced apart from each other by at least one of approximately 70% of a spot size for the first laser ablation spots and approximately 60% to approximately 80% of the spot size for the first laser ablation spots.
10. The method of 8 or 9, wherein the first shift results in the first laser ablation spots of the first return leg being spaced apart from the first laser ablation spots of the first start leg to further reduce surface heating of the workpiece.
11. The method of any one of 8 to 10, wherein the first laser ablation spots of the first return leg are spaced apart from the first laser ablation spots of the first start leg by at least one of approximately 70% of a spot size for the first laser ablation spots and approximately 60% to approximately 80% of the spot size for the first laser ablation spots.
12. The method of any one of 1 to 11, wherein the second start leg extends from a second start point of origin to a second start destination in an x-direction relating to the x-axis, the second shift extends from the second start destination to a second return point of origin in a y-direction relating to the y-axis and the second return leg extends from the second return point of origin to a second return destination in the x-direction.
13. The method of any one of 1 to 12, wherein the second start leg and the second return leg are scanned at a predetermined speed to produce second laser ablation spots on the surface that are spaced apart from each other to reduce surface heating of the workpiece.
14. The method of 13, wherein the second laser ablation spots of the second start leg are spaced apart from each other and the second laser ablation spots of the second return leg are spaced apart from each other by at least one of approximately 70% of a spot size for the second laser ablation spots and approximately 60% to approximately 80% of the spot size for the second laser ablation spots.
15. The method of 13 or 14, wherein the second shift results in the second laser ablation spots of the second return leg being spaced apart from the second laser ablation spots of the second start leg to further reduce surface heating of the workpiece.
16. The method of any one of 13 to 15, wherein the second laser ablation spots of the second return leg are spaced apart from the second laser ablation spots of the second start leg by at least one of approximately 70% of a spot size for the second laser ablation spots and approximately 60% to approximately 80% of the spot size for the second laser ablation spots.
17. The method of any one of 1 to 6, wherein the first start leg extends from a first start point of origin to a first start destination in an x-direction relating to the x-axis, the first shift extends from the first start destination to a first return point of origin in a y-direction relating to the y-axis and the first return leg extends from the first return point of origin to a first return destination in the x-direction, and
   wherein the second start leg extends from a second start point of origin to a second start destination in the x-direction, the second shift extends from the second start destination to a second return point of origin in the y-direction and the second return leg extends from the second return point of origin to a second return destination in the x-direction.
18. The method of 17, wherein the first start leg and the first return leg are scanned at a predetermined speed to produce first laser ablation spots on the surface that are spaced apart from each other to reduce surface heating of the workpiece, and
   wherein the second start leg and the second return leg are scanned at the predetermined speed to produce second laser ablation spots on the surface that are spaced apart from each other to further reduce surface heating of the workpiece.
19. The method of 18, wherein the second ablation pass is interleaved with the first ablation pass such that the second laser ablation spots overlay spaces between the first laser ablation spots of the first start leg and the first return leg and partially overlap adjacent first laser ablation spots.
20. The method of 18 or 19, wherein the second laser ablation spots overlap the adjacent first laser ablation spots by at least one of approximately 15% of a spot size for the second laser ablation spots and approximately 10% to approximately 20% of the spot size for the second laser ablation spots.
21. The method of any one of 1 to 20, wherein the third start leg extends from a third start point of origin to a third start destination in an x-direction relating to the x-axis, the third shift extends from the third start destination to a third return point of origin in a y-direction relating to the y-axis and the third return leg extends from the third return point of origin to a third return destination in the x-direction.
22. The method of 21, wherein the third start leg and the third return leg are scanned at a predetermined speed to produce third laser ablation spots on the surface that are spaced apart from each other to reduce surface heating of the workpiece.
23. The method of 22, wherein the third laser ablation spots of the third start leg are spaced apart from each other and the third laser ablation spots of the third return leg are spaced apart from each other by at least one of approximately 70% of a spot size for the third laser ablation spots and approximately 60% to approximately 80% of the spot size for the third laser ablation spots.
24. The method of 22 or 23, wherein the third shift results in the third laser ablation spots of the third return leg being spaced apart from the third laser ablation spots of the third start leg to further reduce surface heating of the workpiece.
25. The method of any one of 22 to 24, wherein the third laser ablation spots of the third return leg are spaced apart from the third laser ablation spots of the third start leg by at least one of approximately 70% of a spot size for the third laser ablation spots and approximately 60% to approximately 80% of the spot size for the third laser ablation spots.
26. The method of any one of 1 to 6, wherein the first start leg extends from a first start point of origin to a first start destination in an x-direction relating to the x-axis, the first shift extends from the first start destination to a first return point of origin in a y-direction relating to the y-axis and the first return leg extends from the first return point of origin to a first return destination in the x-direction, and
   wherein the third start leg extends from a third start point of origin to a third start destination in the x-direction, the third shift extends from the third start destination to a third return point of origin in the y-direction and the third return leg extends from the third return point of origin to a third return destination in the x-direction.
27. The method of 26, wherein the first start leg and the first return leg are scanned at a predetermined speed to produce first laser ablation spots on the surface that are spaced apart from each other to reduce surface heating of the workpiece, and
   wherein the third start leg and the third return leg are scanned at the predetermined speed to produce third laser ablation spots on the surface that are spaced apart from each other to reduce surface heating of the workpiece.
28. The method of 27, wherein the third ablation pass is interleaved with the first ablation pass such that the third laser ablation spots of the third start leg overlay spaces between the first laser ablation spots of the first start leg and the first return leg and partially overlap adjacent first laser ablation spots.
29. The method of 27 or 28, wherein the third laser ablation spots overlap the adjacent first laser ablation spots by at least one of approximately 15% of a spot size for the third laser ablation spots and approximately 10% to approximately 20% of the spot size for the third laser ablation spots.
30. The method of any one of 1 to 29, wherein the fourth start leg extends from a fourth start point of origin to a fourth start destination in an x-direction relating to the x-axis, the fourth shift extends from the fourth start destination to a fourth return point of origin in a y-direction relating to the y-axis and the fourth return leg extends from the fourth return point of origin to a fourth return destination in the x-direction.
31. The method of 30, wherein the fourth start leg and the fourth return leg are scanned at a predetermined speed to produce fourth laser ablation spots on the surface that are spaced apart from each other to reduce surface heating of the workpiece.
32. The method of 31, wherein the fourth laser ablation spots of the fourth start leg are spaced apart from each other and the fourth laser ablation spots of the fourth return leg are spaced apart from each other by at least one of approximately 70% of a spot size for the fourth laser ablation spots and approximately 60% to approximately 80% of the spot size for the fourth laser ablation spots.
33. The method of 31 or 32, wherein the fourth shift results in the fourth laser ablation spots of the fourth return leg being spaced apart from the fourth laser ablation spots of the fourth start leg to further reduce surface heating of the workpiece.
34. The method of any one of 31 to 33, wherein the fourth laser ablation spots of the fourth return leg are spaced apart from the fourth laser ablation spots of the fourth start leg by at least one of approximately 70% of a spot size for the fourth laser ablation spots and approximately 60% to approximately 80% of the spot size for the fourth laser ablation spots.
35. The method of any one of 1 to 6, wherein the third start leg extends from a third start point of origin to a third start destination in an x-direction relating to the x-axis, the third shift extends from the third start destination to a third return point of origin in a y-direction relating to the y-axis and the third return leg extends from the third return point of origin to a third return destination in the x-direction, and
   wherein the fourth start leg extends from a fourth start point of origin to a fourth start destination in the x-direction, the fourth shift extends from the fourth start destination to a fourth return point of origin in the y-direction and the fourth return leg extends from the fourth return point of origin to a fourth return destination in the x-direction.
36. The method of 35, wherein the third start leg and the third return leg are scanned at a predetermined speed to produce third laser ablation spots on the surface that are spaced apart from each other to reduce surface heating of the workpiece, and
   wherein the fourth start leg and the fourth return leg are scanned at the predetermined speed to produce fourth laser ablation spots on the surface that are spaced apart from each other to reduce surface heating of the workpiece.
37. The method of 36, wherein the fourth ablation pass is interleaved with the third ablation pass such that the fourth laser ablation spots overlay spaces between the third laser ablation spots of the third start leg and the third return leg and partially overlap adjacent third laser ablation spots.
38. The method of 36 or 37, wherein the fourth laser ablation spots overlap the adjacent third laser ablation spots by at least one of approximately 15% of a spot size for the fourth laser ablation spots and approximately 10% to approximately 20% of the spot size for the fourth laser ablation spots.
39. The method of any one of 1 to 38, further comprising:
   repeating the performing of the first ablation pass, the performing of the second ablation pass, the performing of the third ablation pass and the performing of the fourth ablation pass until the target area is ablated by the ultraviolet laser scanner.
40. The method of any one of 1 to 38, further comprising:
   repeating the selecting of the target area for one or more additional target areas where the surface of the workpiece comprises multiple target areas; and
   repeating the performing of the first ablation pass, the performing of the second ablation pass, the performing of the third ablation pass and the performing of the fourth ablation pass for each additional target area until the additional target area is ablated by the ultraviolet laser scanner.
41. The method of 40, further comprising:
   applying a coating to the surface of the workpiece after the target area and the one or more additional target areas are ablated by the ultraviolet laser scanner.
42. The method of 41, wherein the coating comprises at least one of a primer, a topcoat, a paint and a sealant.
43. A method for preparing a surface of a workpiece, the method comprising:
   selecting a target area on the surface of the workpiece for ablation in a multi-pass approach using an ultraviolet laser scanner, the target area comprising an x-axis and a y-axis; and
   performing a first ablation pass of the target area with the ultraviolet laser scanner in a pulsed mode, the first ablation pass comprising a first start leg, a first shift and a first return leg, the first start leg being from a first start point of origin to a first start destination in an x-direction relating to the x-axis, the first shift being from the first start destination to a first return point of origin in a y-direction relating to the y-axis and the first return leg being from the first return point of origin to a first return destination in the x-direction, the first start leg and the first return leg being scanned at a predetermined speed to produce first laser ablation spots on the surface that are spaced apart from each other to reduce surface heating of the workpiece, the first shift resulting in the first laser ablation spots of the first return leg being spaced apart from the first laser ablation spots of the first start leg to further reduce surface heating of the workpiece.
44. The method of 43, wherein the surface comprises at least one of an exterior surface of the workpiece and an interior surface of the workpiece.
45. The method of 43 or 44, wherein the workpiece comprises at least one of a thermoplastic composite workpiece and a thermoplastic workpiece.
46. The method of any one of 43 to 45, wherein the ultraviolet laser scanner comprises a two-dimensional ultraviolet laser scanner.
47. The method of any one of 43 to 46, wherein the pulsed mode comprises emission of ultraviolet laser pulses from the ultraviolet laser scanner at a pulse rate of at least one of approximately 125 kilohertz (kHz), approximately 115 to approximately 135 kHz, approximately 105 to approximately 145 kHz, approximately 95 to approximately 155 kHz, approximately 85 to approximately 165 kHz, approximately 75 to approximately 175 kHz, approximately 65 to approximately 185 kHz and approximately 50 to approximately 200 kHz.
48. The method of any one of 43 to 47, wherein the surface of the workpiece comprises multiple target areas.
49. The method of any one of 43 to 48, further comprising:
   performing a second ablation pass of the target area with the ultraviolet laser scanner in the pulsed mode, the second ablation pass comprising a second start leg, a second shift and a second return leg, the second start leg being from a second start point of origin to a second start destination in the x-direction, the second shift being from the second start destination to a second return point of origin in the y-direction and the second return leg being from the second return point of origin to a second return destination in the x-direction, the second start leg and the second return leg being scanned at the predetermined speed to produce second laser ablation spots on the surface that are spaced apart from each other to reduce surface heating of the workpiece, the second shift resulting in the second laser ablation spots of the second return leg being spaced apart from the second laser ablation spots of the second start leg to further reduce surface heating of the workpiece, the second ablation pass being interleaved with the first ablation pass such that the second laser ablation spots overlay spaces between the first laser ablation spots of the first start leg and the first return leg and partially overlap adjacent first laser ablation spots.
50. The method of 49, further comprising:
   performing a third ablation pass of the target area with the ultraviolet laser scanner in the pulsed mode, the third ablation pass comprising a third start leg, a third shift and a third return leg, the third start leg being from a third start point of origin to a third start destination in the x-direction, the third shift being from the third start destination to a third return point of origin in the y-direction and the third return leg being from the third return point of origin to a third return destination in the x-direction, the third start leg and the third return leg being scanned at the predetermined speed to produce third laser ablation spots on the surface that are spaced apart from each other to reduce surface heating of the workpiece, the third shift resulting in the third laser ablation spots of the third return leg being spaced apart from the third laser ablation spots of the third start leg to further reduce surface heating of the workpiece, the third ablation pass being interleaved with the first ablation pass such that the third laser ablation spots of the third start leg overlay spaces between the first laser ablation spots of the first start leg and the first return leg and partially overlap adjacent first laser ablation spots.
51. The method of 50, further comprising:
   performing a fourth ablation pass of the target area with the ultraviolet laser scanner in a pulsed mode, the fourth ablation pass comprising a fourth start leg, a fourth shift and a fourth return leg, the fourth start leg being from a fourth start point of origin to a fourth start destination in the x-direction, the fourth shift being from the fourth start destination to a fourth return point of origin in the y-direction and the fourth return leg being from the fourth return point of origin to a fourth return destination in the x-direction, the fourth start leg and the fourth return leg being scanned at the predetermined speed to produce fourth laser ablation spots on the surface that are spaced apart from each other to reduce surface heating of the workpiece, the fourth shift resulting in the fourth laser ablation spots of the fourth return leg being spaced apart from the fourth laser ablation spots of the fourth start leg to further reduce surface heating of the workpiece, the fourth ablation pass being interleaved with the third ablation pass such that the fourth laser ablation spots overlay spaces between the third laser ablation spots of the third start leg and the third return leg and partially overlap adjacent third laser ablation spots.
52. The method of 51, further comprising:
   repeating the performing of the first ablation pass, the performing of the second ablation pass, the performing of the third ablation pass and the performing of the fourth ablation pass until the target area is ablated by the ultraviolet laser scanner.
53. The method of 51, further comprising:
   repeating the selecting of the target area for one or more additional target areas where the surface of the workpiece comprises multiple target areas; and
   repeating the performing of the first ablation pass, the performing of the second ablation pass, the performing of the third ablation pass and the performing of the fourth ablation pass for each additional target area until the additional target area is ablated by the ultraviolet laser scanner.
54. The method of 53, further comprising:
   applying a coating to the surface of the workpiece after the target area and the one or more additional target areas are ablated by the ultraviolet laser scanner.
55. The method of 54, wherein the coating comprises at least one of a primer, a topcoat, a paint and a sealant.
56. A laser ablation system for preparing a surface of a workpiece, the laser ablation system comprising:
   a computing device; and
   an ultraviolet laser scanner in operative communication with the computing device;
   wherein the computing device is configured to select a target area on the surface of the workpiece for ablation in a multi-pass approach using the ultraviolet laser scanner, the target area comprising an x-axis and a y-axis, and
   wherein the computing device and the ultraviolet laser scanner are configured to perform a first ablation pass of the target area in a pulsed mode, the first ablation pass comprising a first start leg, a first shift and a first return leg, and
   wherein the computing device and the ultraviolet laser scanner are configured to perform a second ablation pass of the target area in the pulsed mode, the second ablation pass comprising a second start leg, a second shift and a second return leg, and
   wherein the computing device and the ultraviolet laser scanner are configured to perform a third ablation pass of the target area in the pulsed mode, the third ablation pass comprising a third start leg, a third shift and a third return leg, and
   wherein the computing device and the ultraviolet laser scanner are configured to perform a fourth ablation pass of the target area in the pulsed mode, the fourth ablation pass comprising a fourth start leg, a fourth shift and a fourth return leg.
57. The laser ablation system of 56, wherein the surface comprises at least one of an exterior surface of the workpiece and an interior surface of the workpiece.
58. The laser ablation system of 56 or 57, wherein the workpiece comprises at least one of a thermoplastic composite workpiece and a thermoplastic workpiece.
59. The laser ablation system of any one of 56 to 58, wherein the ultraviolet laser scanner comprises a two-dimensional ultraviolet laser scanner.
60. The laser ablation system of any one of 56 to 59, wherein the pulsed mode comprises emission of ultraviolet laser pulses from the ultraviolet laser scanner at a pulse rate of at least one of approximately 125 kilohertz (kHz), approximately 115 to approximately 135 kHz, approximately 105 to approximately 145 kHz, approximately 95 to approximately 155 kHz, approximately 85 to approximately 165 kHz, approximately 75 to approximately 175 kHz, approximately 65 to approximately 185 kHz and approximately 50 to approximately 200 kHz.
61. The laser ablation system of any one of 56 to 60, wherein the surface of the workpiece comprises multiple target areas.
62. The laser ablation system of any one of 56 to 61, the computing device comprising:
   at least one processor and associated memory;
   a network interface in operative communication with the at least one processor and at least one central storage device via a communication network;
   the ultraviolet laser scanner in operative communication with the at least one processor;
   a positioning system in operative communication with the at least one processor;
   at least one application program storage device in operative communication with the at least one processor, the at least one application program storage device storing a central storage device interface program, a workpiece mapping application program, a target area mapping application program, an ultraviolet laser scanner control program and a positioning system control program; and
   at least one data storage device in operative communication with the at least one processor, the at least one data storage device configured to store a workpiece map, a target area map, ultraviolet laser scanner parameter data and workpiece design data.
63. The laser ablation system of 62 wherein the at least one processor, in conjunction with the target area mapping application program, is configured to define the first ablation pass in which the first start leg extends from a first start point of origin to a first start destination in an x-direction relating to the x-axis, the first shift extends from the first start destination to a first return point of origin in a y-direction relating to the y-axis and the first return leg extends from the first return point of origin to a first return destination in the x-direction.
64. The laser ablation system of 63 wherein the at least one processor and the ultraviolet laser scanner, in conjunction with the ultraviolet laser scanner control program, are configured to scan the first start leg and the first return leg at a predetermined speed to produce first laser ablation spots on the surface that are spaced apart from each other to reduce surface heating of the workpiece.
65. The laser ablation system of 64 wherein the at least one processor and the ultraviolet laser scanner, in conjunction with the ultraviolet laser scanner control program, are configured to perform the first shift which results in the first laser ablation spots of the first return leg being spaced apart from the first laser ablation spots of the first start leg to further reduce surface heating of the workpiece.
66. The laser ablation system of any one of 62 to 65, wherein the at least one processor, in conjunction with the target area mapping application program, is configured to define the second ablation pass in which the second start leg extends from a second start point of origin to a second start destination in an x-direction relating to the x-axis, the second shift extends from the second start destination to a second return point of origin in a y-direction relating to the y-axis and the second return leg extends from the second return point of origin to a second return destination in the x-direction.
67. The laser ablation system of 66 wherein the at least one processor and the ultraviolet laser scanner, in conjunction with the ultraviolet laser scanner control program, are configured to scan the second start leg and the second return leg at a predetermined speed to produce second laser ablation spots on the surface that are spaced apart from each other to reduce surface heating of the workpiece.
68. The laser ablation system of 67 wherein the at least one processor and the ultraviolet laser scanner, in conjunction with the ultraviolet laser scanner control program, are configured to perform the second shift which results in the second laser ablation spots of the second return leg being spaced apart from the second laser ablation spots of the second start leg to further reduce surface heating of the workpiece.
69. The laser ablation system of 67 or 68 wherein the at least one processor and the ultraviolet laser scanner, in conjunction with the target area mapping application program and the ultraviolet laser scanner control program, are configured to interleave the second ablation pass with the first ablation pass such that the second laser ablation spots overlay spaces between first laser ablation spots of the first start leg and the first return leg and partially overlap adjacent first laser ablation spots.
70. The laser ablation system of any one of 62 to 69, wherein the at least one processor, in conjunction with the target area mapping application program, is configured to define the third ablation pass in which the third start leg extends from a third start point of origin to a third start destination in an x-direction relating to the x-axis, the third shift extends from the third start destination to a third return point of origin in a y-direction relating to the y-axis and the third return leg extends from the third return point of origin to a third return destination in the x-direction.
71. The laser ablation system of 70, wherein the at least one processor and the ultraviolet laser scanner, in conjunction with the ultraviolet laser scanner control program, are configured to scan the third start leg and the third return leg at a predetermined speed to produce third laser ablation spots on the surface that are spaced apart from each other to reduce surface heating of the workpiece.
72. The laser ablation system of 71, wherein the at least one processor and the ultraviolet laser scanner, in conjunction with the ultraviolet laser scanner control program, are configured to perform the third shift which results in the third laser ablation spots of the third return leg being spaced apart from the third laser ablation spots of the third start leg to further reduce surface heating of the workpiece.
73. The laser ablation system of 71 or 72, wherein the at least one processor and the ultraviolet laser scanner, in conjunction with the target area mapping application program and the ultraviolet laser scanner control program, are configured to interleave the third ablation pass with the first ablation pass such that the third laser ablation spots of the third start leg overlay spaces between first laser ablation spots of the first start leg and the first return leg and partially overlap adjacent first laser ablation spots.
74. The laser ablation system of any one of 62 to 73, wherein the at least one processor, in conjunction with the target area mapping application program, is configured to define the fourth ablation pass in which the fourth start leg extends from a fourth start point of origin to a fourth start destination in an x-direction relating to the x-axis, the fourth shift extends from the fourth start destination to a fourth return point of origin in a y-direction relating to the y-axis and the fourth return leg extends from the fourth return point of origin to a fourth return destination in the x-direction.
75. The laser ablation system of 74, wherein the at least one processor and the ultraviolet laser scanner, in conjunction with the ultraviolet laser scanner control program, are configured to scan the fourth start leg and the fourth return leg at a predetermined speed to produce fourth laser ablation spots on the surface that are spaced apart from each other to reduce surface heating of the workpiece.
76. The laser ablation system of 75, wherein the at least one processor and the ultraviolet laser scanner, in conjunction with the ultraviolet laser scanner control program, are configured to perform the fourth shift which results in the fourth laser ablation spots of the fourth return leg being spaced apart from the fourth laser ablation spots of the fourth start leg to further reduce surface heating of the workpiece.
77. The laser ablation system of 75 or 76, wherein the at least one processor and the ultraviolet laser scanner, in conjunction with the target area mapping application program and the ultraviolet laser scanner control program, are configured to interleave the fourth ablation pass with the third ablation pass such that the fourth laser ablation spots overlay spaces between third laser ablation spots of the of the third start leg and the third return leg and partially overlap adjacent third laser ablation spots.
78. The laser ablation system of any one of 62 to 77, wherein the at least one processor the ultraviolet laser scanner, in conjunction with the target area mapping application program and the ultraviolet laser scanner control program, are configured to repetitively perform the first ablation pass, the second ablation pass, the third ablation pass and the fourth ablation pass until the target area is ablated by the ultraviolet laser scanner.
79. The laser ablation system of any one of 62 to 77, wherein the at least one processor, the ultraviolet laser scanner and the positioning system, in conjunction with the workpiece mapping application program, the ultraviolet laser scanner control program and the positioning system control program, are configured to repetitively select one or more additional target areas where the surface of the workpiece comprises multiple target areas, and
wherein the at least one processor the ultraviolet laser scanner, in conjunction with the target area mapping application program and the ultraviolet laser scanner control program, are configured to repetitively perform the first ablation pass, the second ablation pass, the third ablation pass and the fourth ablation pass for each additional target area until the additional target area is ablated by the ultraviolet laser scanner.

## Claims

1. A method (100) for preparing a surface (906) of a workpiece (908), the method comprising:
selecting (102) a target area (910) on the surface (906) of the workpiece (908) for ablation in a multi-pass approach using an ultraviolet laser scanner (904), the target area (910) comprising an x-axis (912) and a y-axis (914);
performing (104) a first ablation pass (202) of the target area (910) with the ultraviolet laser scanner (904) in a pulsed mode, the first ablation pass (202) comprising a first start leg (302), a first shift (304) and a first return leg (306);
performing (106) a second ablation pass (204) of the target area (910) with the ultraviolet laser scanner (904) in the pulsed mode, the second ablation pass (204) comprising a second start leg (308), a second shift (310) and a second return leg (312);
performing (108) a third ablation pass (206) of the target area (910) with the ultraviolet laser scanner (904) in the pulsed mode, the third ablation pass (206) comprising a third start leg (314), a third shift (316) and a third return leg (318); and
performing (110) a fourth ablation pass (208) of the target area (910) with the ultraviolet laser scanner (904) in the pulsed mode, the fourth ablation pass (208) comprising a fourth start leg (320), a fourth shift (322) and a fourth return leg (324).

2. The method of Claim 1 wherein the surface (906) comprises at least one of an exterior surface of the workpiece (908) and an interior surface of the workpiece (908), optionally wherein the surface (906) comprises multiple target areas (910).

3. The method of Claim 1 or 2, wherein the workpiece (908) comprises at least one of a thermoplastic composite workpiece and a thermoplastic workpiece.

4. The method of any one of the preceding Claims, wherein the ultraviolet laser scanner (904) comprises a two-dimensional ultraviolet laser scanner.

5. The method of any one of the preceding Claims. wherein the pulsed mode comprises emission of ultraviolet laser pulses from the ultraviolet laser scanner (904) at a pulse rate of at least one of approximately 125 kilohertz (kHz), approximately 115 to approximately 135 kHz, approximately 105 to approximately 145 kHz, approximately 95 to approximately 155 kHz, approximately 85 to approximately 165 kHz, approximately 75 to approximately 175 kHz, approximately 65 to approximately 185 kHz and approximately 50 to approximately 200 kHz.

6. The method of any one of the preceding Claims, wherein the first start leg (302) extends from a first start point of origin (326) to a first start destination (328) in an x-direction relating to the x-axis (912), the first shift (304) extends from the first start destination (328) to a first return point of origin (330) in a y-direction relating to the y-axis (914) and the first return leg (306) extends from the first return point of origin (330) to a first return destination (332) in the x-direction,
optionally, wherein the first start leg (302) and the first return leg (306) are scanned at a predetermined speed to produce first laser ablation spots (210) on the surface (906) that are spaced apart from each other to reduce surface heating of the workpiece (908),
further optionally, wherein the first laser ablation spots (210) of the first start leg (302) are spaced apart from each other and the first laser ablation spots (210) of the first return leg (306) are spaced apart from each other by at least one of approximately 70% of a spot size for the first laser ablation spots (210) and approximately 60% to approximately 80% of the spot size for the first laser ablation spots (210),
even further optionally, wherein the first shift (304) results in the first laser ablation spots (210) of the first return leg (306) being spaced apart from the first laser ablation spots (210) of the first start leg (302) to further reduce surface heating of the workpiece (908),
still further optionally, wherein the first laser ablation spots (210) of the first return leg (306) are spaced apart from the first laser ablation spots (210) of the first start leg (302) by at least one of approximately 70% of a spot size for the first laser ablation spots (210) and approximately 60% to approximately 80% of the spot size for the first laser ablation spots (210).

7. The method of any one of the preceding Claims wherein the second start leg (308) extends from a second start point of origin (334) to a second start destination (336) in an x-direction relating to the x-axis (912), the second shift (310) extends from the second start destination (336) to a second return point of origin (338) in a y-direction relating to the y-axis (914) and the second return leg (312) extends from the second return point of origin (338) to a second return destination (340) in the x-direction,
optionally, wherein the second start leg (308) and the second return leg (312) are scanned at a predetermined speed to produce second laser ablation spots (212) on the surface (906) that are spaced apart from each other to reduce surface heating of the workpiece (908),
further optionally, wherein the second laser ablation spots (212) of the second start leg (308) are spaced apart from each other and the second laser ablation spots (212) of the second return leg (312) are spaced apart from each other by at least one of approximately 70% of a spot size for the second laser ablation spots (212) and approximately 60% to approximately 80% of the spot size for the second laser ablation spots (212),
even further optionally, wherein the second shift (310) results in the second laser ablation spots (212) of the second return leg (312) being spaced apart from the second laser ablation spots (212) of the second start leg (308) to further reduce surface heating of the workpiece (908),
still further optionally, wherein the second laser ablation spots (212) of the second return leg (312) are spaced apart from the second laser ablation spots (212) of the second start leg (308) by at least one of approximately 70% of a spot size for the second laser ablation spots (212) and approximately 60% to approximately 80% of the spot size for the second laser ablation spots (212).

8. The method of any one of Claims 1 to 5, wherein the first start leg (302) extends from a first start point of origin (326) to a first start destination (328) in an x-direction relating to the x-axis (912), the first shift (304) extends from the first start destination (328) to a first return point of origin (330) in a y-direction relating to the y-axis (914) and the first return leg (306) extends from the first return point of origin (330) to a first return destination (332) in the x-direction, and
wherein the second start leg (308) extends from a second start point of origin (334) to a second start destination (336) in the x-direction, the second shift (310) extends from the second start destination (336) to a second return point of origin (338) in the y-direction and the second return leg (312) extends from the second return point of origin (338) to a second return destination (340) in the x-direction,
optionally, wherein the first start leg (302) and the first return leg (306) are scanned at a predetermined speed to produce first laser ablation spots (210) on the surface (906) that are spaced apart from each other to reduce surface heating of the workpiece (908), and
wherein the second start leg (308) and the second return leg (312) are scanned at the predetermined speed to produce second laser ablation spots (212) on the surface (906) that are spaced apart from each other to further reduce surface heating of the workpiece (908),
further optionally, wherein the second ablation pass (204) is interleaved with the first ablation pass (202) such that the second laser ablation spots (212) overlay spaces between the first laser ablation spots (210) of the first start leg (302) and the first return leg (306) and partially overlap adjacent first laser ablation spots (210),
even further optionally, wherein the second laser ablation spots (212) overlap the adjacent first laser ablation spots (210) by at least one of approximately 15% of a spot size for the second laser ablation spots (212) and approximately 10% to approximately 20% of the spot size for the second laser ablation spots (212).

9. The method of any one of the preceding Claims, wherein the third start leg (314) extends from a third start point of origin (342) to a third start destination (344) in an x-direction relating to the x-axis (912), the third shift (316) extends from the third start destination (344) to a third return point of origin (346) in a y-direction relating to the y-axis (914) and the third return leg (318) extends from the third return point of origin (346) to a third return destination (348) in the x-direction,
optionally, wherein the third start leg (314) and the third return leg (318) are scanned at a predetermined speed to produce third laser ablation spots (214) on the surface (906) that are spaced apart from each other to reduce surface heating of the workpiece (908),
further optionally, wherein the third laser ablation spots (214) of the third start leg (314) are spaced apart from each other and the third laser ablation spots (214) of the third return leg (318) are spaced apart from each other by at least one of approximately 70% of a spot size for the third laser ablation spots (214) and approximately 60% to approximately 80% of the spot size for the third laser ablation spots (214),
even further optionally, wherein the third shift (316) results in the third laser ablation spots (214) of the third return leg (318) being spaced apart from the third laser ablation spots (214) of the third start leg (314) to further reduce surface heating of the workpiece (908),
still further optionally, wherein the third laser ablation spots (214) of the third return leg (318) are spaced apart from the third laser ablation spots (214) of the third start leg (314) by at least one of approximately 70% of a spot size for the third laser ablation spots (214) and approximately 60% to approximately 80% of the spot size for the third laser ablation spots (214).

10. The method of any one of Claims 1 to 5, wherein the first start leg (302) extends from a first start point of origin (326) to a first start destination (328) in an x-direction relating to the x-axis (912), the first shift (304) extends from the first start destination (328) to a first return point of origin (330) in a y-direction relating to the y-axis (914) and the first return leg (306) extends from the first return point of origin (330) to a first return destination (332) in the x-direction, and
wherein the third start leg (314) extends from a third start point of origin (342) to a third start destination (344) in the x-direction, the third shift (316) extends from the third start destination (344) to a third return point of origin (346) in the y-direction and the third return leg (318) extends from the third return point of origin (346) to a third return destination (348) in the x-direction,
optionally, wherein the first start leg (302) and the first return leg (306) are scanned at a predetermined speed to produce first laser ablation spots (210) on the surface (906) that are spaced apart from each other to reduce surface heating of the workpiece (908), and
wherein the third start leg (314) and the third return leg (318) are scanned at the predetermined speed to produce third laser ablation spots (214) on the surface (906) that are spaced apart from each other to reduce surface heating of the workpiece (908),
further optionally, wherein the third ablation pass (206) is interleaved with the first ablation pass (202) such that the third laser ablation spots (214) of the third start leg (314) overlay spaces between the first laser ablation spots (210) of the first start leg (302) and the first return leg (306) and partially overlap adjacent first laser ablation spots (210),
even further optionally, wherein the third laser ablation spots (214) overlap the adjacent first laser ablation spots (210) by at least one of approximately 15% of a spot size for the third laser ablation spots (214) and approximately 10% to approximately 20% of the spot size for the third laser ablation spots (214).

11. The method of any one of the preceding Claims, wherein the fourth start leg (320) extends from a fourth start point of origin (350) to a fourth start destination (352) in an x-direction relating to the x-axis (912), the fourth shift (322) extends from the fourth start destination (352) to a fourth return point of origin (354) in a y-direction relating to the y-axis (914) and the fourth return leg (324) extends from the fourth return point of origin (354) to a fourth return destination (356) in the x-direction,
optionally, wherein the fourth start leg (320) and the fourth return leg (324) are scanned at a predetermined speed to produce fourth laser ablation spots (216) on the surface (906) that are spaced apart from each other to reduce surface heating of the workpiece (908),
further optionally, wherein the fourth laser ablation spots (216) of the fourth start leg (320) are spaced apart from each other and the fourth laser ablation spots (216) of the fourth return leg (324) are spaced apart from each other by at least one of approximately 70% of a spot size for the fourth laser ablation spots (216) and approximately 60% to approximately 80% of the spot size for the fourth laser ablation spots (216),
even further optionally, wherein the fourth shift (322) results in the fourth laser ablation spots (216) of the fourth return leg (324) being spaced apart from the fourth laser ablation spots (216) of the fourth start leg (320) to further reduce surface heating of the workpiece (908),
still further optionally, wherein the fourth laser ablation spots (216) of the fourth return leg (324) are spaced apart from the fourth laser ablation spots (216) of the fourth start leg (320) by at least one of approximately 70% of a spot size for the fourth laser ablation spots (216) and approximately 60% to approximately 80% of the spot size for the fourth laser ablation spots (216).

12. The method of any one of Claims 1 to 5, wherein the third start leg (314) extends from a third start point of origin (342) to a third start destination (344) in an x-direction relating to the x-axis (912), the third shift (316) extends from the third start destination (344) to a third return point of origin (346) in a y-direction relating to the y-axis (914) and the third return leg (318) extends from the third return point of origin (346) to a third return destination (348) in the x-direction, and
wherein the fourth start leg (320) extends from a fourth start point of origin (350) to a fourth start destination (352) in the x-direction, the fourth shift (322) extends from the fourth start destination (352) to a fourth return point of origin (354) in the y-direction and the fourth return leg (324) extends from the fourth return point of origin (354) to a fourth return destination (356) in the x-direction,
optionally, wherein the third start leg (314) and the third return leg (318) are scanned at a predetermined speed to produce third laser ablation spots (214) on the surface (906) that are spaced apart from each other to reduce surface heating of the workpiece (908), and
wherein the fourth start leg (320) and the fourth return leg (324) are scanned at the predetermined speed to produce fourth laser ablation spots (216) on the surface (906) that are spaced apart from each other to reduce surface heating of the workpiece (908),
further optionally, wherein the fourth ablation pass (208) is interleaved with the third ablation pass (206) such that the fourth laser ablation spots (216) overlay spaces between the third laser ablation spots (214) of the third start leg (314) and the third return leg (318) and partially overlap adjacent third laser ablation spots (214),
even further optionally, wherein the fourth laser ablation spots (216) overlap the adjacent third laser ablation spots (214) by at least one of approximately 15% of a spot size for the fourth laser ablation spots (216) and approximately 10% to approximately 20% of the spot size for the fourth laser ablation spots (216).

13. The method (400) of any one of Claims 1 to 12, further comprising:
repeating (402) the performing (104) of the first ablation pass (202), the performing (106) of the second ablation pass (204), the performing (108) of the third ablation pass (206) and the performing (110) of the fourth ablation pass (208) until the target area (910) is ablated by the ultraviolet laser scanner (904).

14. The method (500) of any one of Claims 1 to 12, further comprising:
repeating (502) the selecting (102) of the target area (910) for one or more additional target areas (910) where the surface (906) of the workpiece (908) comprises multiple target areas (910); and
repeating (504) the performing (104) of the first ablation pass (202), the performing (106) of the second ablation pass (204), the performing (108) of the third ablation pass (206) and the performing (110) of the fourth ablation pass (208) for each additional target area (910) until the additional target area (910) is ablated by the ultraviolet laser scanner (904),
optionally, wherein the method further comprises:
applying (506) a coating to the surface (906) of the workpiece (908) after the target area (910) and the one or more additional target areas (910) are ablated by the ultraviolet laser scanner (904),
further optionally, wherein the coating comprises at least one of a primer, a topcoat, a paint and a sealant.

15. A laser ablation system (900) for preparing a surface (906) of a workpiece (908), the laser ablation system comprising:
a computing device (902); and
an ultraviolet laser scanner (904) in operative communication with the computing device (902);
wherein the computing device (902) is configured to select a target area (910) on the surface (906) of the workpiece (908) for ablation in a multi-pass approach using the ultraviolet laser scanner (904), the target area (910) comprising an x-axis (912) and a y-axis (914), and
wherein the computing device (902) and the ultraviolet laser scanner (904) are configured to perform a first ablation pass (202) of the target area (910) in a pulsed mode, the first ablation pass (202) comprising a first start leg (302), a first shift (304) and a first return leg (306), and
wherein the computing device (902) and the ultraviolet laser scanner (904) are configured to perform a second ablation pass (204) of the target area (910) in the pulsed mode, the second ablation pass (204) comprising a second start leg (308), a second shift (310) and a second return leg (312), and
wherein the computing device (902) and the ultraviolet laser scanner (904) are configured to perform a third ablation pass (206) of the target area (910) in the pulsed mode, the third ablation pass (206) comprising a third start leg (314), a third shift (316) and a third return leg (318), and
wherein the computing device (902) and the ultraviolet laser scanner (904) are configured to perform a fourth ablation pass (208) of the target area (910) in the pulsed mode, the fourth ablation pass (208) comprising a fourth start leg (320), a fourth shift (322) and a fourth return leg (324).
